# EUROPÄISCHE PATENTSCHRIFT

(11) **EP 4 031 326 B1**
(45) Veröffentlichungstag und Bekanntmachung des Hinweises auf die Patenterteilung: **28.08.2024**
(21) Anmeldenummer: 20792289.9
(22) Anmeldetag: 07.09.2020
(51) Int. Cl.: B24B 27/00, B24B 13/00, B24B 9/14, B29D 11/00

(54) **OPTIKMASCHINE FÜR DAS BEHANDELN UND/ODER BEARBEITEN VON OPTISCHEN WERKSTÜCKEN, WIE BRILLENGLÄSERN, SOWIE ABBLOCKVORRICHTUNG UND ABBLOCKVERFAHREN HIERFÜR**
OPTICAL MACHINE FOR TREATMENT AND/OR PROCESSING OPTICAL WORKPIECES, SUCH AS SPECTACLE LENSES, AS WELL AS DEBLOCKING APPARATUS AND DEBLOCKING METHOD THEREFOR
MACHINE OPTIQUE POUR LE TRAITEMENT ET/OU L'USINAGE DE PIÈCES OPTIQUES, TELLES QUE DES VERRES DE LUNETTES, AINSI QU'UN APPAREIL DE DÉBLOCAGE ET UND MÉTHODE DE DÉBLOCAGE PUR CELLE-CI

(30) Priorität: 16.09.2019 DE 102019006504
(43) Veröffentlichungstag der Anmeldung: 27.07.2022
(73) Patentinhaber: Satisloh AG, 6340 Baar (CH)
(72) Erfinder: SCHÄFER, Holger, 35789 Weilmünster (DE); WALLENDORF, Steffen, 35582 Wetzlar-Dutenhofen (DE); LAUTZ, Martin, 35580 Wetzlar-Nauborn (DE); PAVEL, Gregor, 35625 Hüttenberg (DE)
(74) Vertreter: Oppermann, Mark
(86) Internationale Anmeldenummer: PCT/EP2020/000151
(87) Internationale Veröffentlichungsnummer: WO 2021/052615

(56) Entgegenhaltungen:
- EP-A1- 3 479 956
- DE-A1- 102007 031 703
- DE-A1- 102014 015 053
- DE-A1- 102017 001 679
- US-A1- 2001 051 490

## Beschreibung

### TECHNISCHES GEBIET

Die vorliegende Erfindung bezieht sich allgemein auf eine Optikmaschine für das Behandeln und/oder Bearbeiten von optischen Werkstücken, wie Brillengläsern, gemäß dem Oberbegriff des Patentanspruchs 1. Insbesondere bezieht sich die Erfindung auf eine Optikmaschine zum Abblocken von optischen Werkstücken, namentlich Brillengläsern, von zugeordneten Blockstücken - kurz: Abblockvorrichtung - sowie ein Verfahren zum Abblocken solcher Werkstücke von zugeordneten Blockstücken, entsprechend den Patentansprüchen 11 bzw. 17, wie sie in modernen "RX-Werkstätten", d.h. industriellen Produktionsstätten zur Fertigung von individuellen Brillengläsern nach Rezept umfänglich zum Einsatz kommen.

### STAND DER TECHNIK

Als "Aufblocken" oder kurz "Blocken" wird in der Optikfertigung allgemein der Vorgang bezeichnet, bei dem ein optisches Werkstück mittels eines geeigneten Materials (niedrig schmelzende Legierung - sogenanntes "Alloy" - oder Klebstoff) auf einem sogenannten "Blockstück" temporär befestigt wird, oder aber das Blockmaterial auf dem Werkstück aufgebracht wird, um selbst das Blockstück auszubilden, welches dann dazu dient, das Werkstück in der jeweiligen Bearbeitungsmaschine und/oder Beschichtungsanlage zu halten.

In den vorerwähnten RX-Werkstätten werden Brillengläser massenweise geblockt, bevor sodann das jeweilige geblockte Brillenglas an seiner Rück- oder Frontfläche im Hinblick auf seine optische Wirkung und/oder am Rand zur Einpassung in ein zugeordnetes Brillengestell mit geometrisch bestimmter Schneide (Fräsen/Drehen) oder geometrisch unbestimmter Schneide (Schleifen/Polieren) spanend bearbeitet und/oder auf seiner Rück- oder Frontfläche zur Erzielung zusätzlicher Wirkungen (Erhöhung der Kratzfestigkeit, Antireflexionseigenschaften, Verspiegelung, hydrophobe Eigenschaften, etc.) beschichtet wird.

Wenn nachfolgend im Zusammenhang mit der vorliegenden Erfindung als bevorzugtem Anwendungsgebiet allgemein von "Brillengläsern" die Rede ist, sind darunter optische Linsen oder Linsenrohlinge (Blanks) für Brillen aus den gebräuchlichen Materialien, wie Polycarbonat, Mineralglas, CR 39, HI-Index, etc. und mit beliebiger (Vor)Form des Umfangsrands der Linse bzw. des Linsenrohlings zu verstehen, die vor dem Blocken bereits an einer oder beiden optisch wirksamen Fläche(n) und/oder am Rand (vor)bearbeitet und/oder (vor)beschichtet sein können aber nicht müssen. Auch kann das Brillenglas auf seiner Fläche, an der es geblockt wird/ist, mit einer Folie, einem Lack od.dgl. versehen sein, um diese Fläche vor Verunreinigung und Beschädigung zu schützen und/oder die Haftungseigenschaften zwischen Brillenglas und Blockmaterial zu verbessern, ohne dass dies im Folgenden jeweils eigens erwähnt wird.

Kontrapunktisch zum "Blocken" heißt in der Optikfertigung derjenige Vorgang "Abblocken", bei dem das optische Werkstück nach dessen (End)Bearbeitung (an Fläche und/oder Rand) und/ oder Beschichtung wieder vom Blockstück/Blockmaterial getrennt wird. Zum Abblocken von Brillengläsern wird im Stand der Technik zumeist ein Druckmittel wie Wasser verwendet, um das Brillenglas vom Blockstück durch Aufbringung hydraulischer Kräfte zu lösen. Hierbei hat sich ein technologischer Ansatz etabliert, bei dem die Aufbringung hydraulischer Kräfte von "außen" erfolgt, und zwar mittels eines von einer Düse abgegebenen Hochdruck-Wasserstrahls, der auf einer Randstelle zwischen Blockstück und Brillenglas auftrifft (beispielsweise WO 2008/003805 A1, Fig. 1, Wasserstrahl 7; DE 10 2009 048 590 A1, Fig. 5, Hochdruck-Wasserstrahl HDS; DE 10 2010 010 334 A1, Fig. 6, Hochdruck-Wasserstrahl H).

Allgemein besitzen vorbekannte Optikmaschinen für das Behandeln und/oder Bearbeiten von optischen Werkstücken, wie Brillengläsern, in der Regel eine an einem Maschinengestell gelagerte Halteanordnung für das optische Werkstück und wenigstens eine, ggf. auch mehrere am Maschinengestell montierte Behandlungs- und/oder Bearbeitungseinrichtungen zur Behandlung und/ oder Bearbeitung des in der Werkstück-Halteanordnung gehaltenen optischen Werkstücks in einem Arbeitsraum, wobei insbesondere zur Behandlung und/oder Bearbeitung des optischen Werkstücks im Arbeitsraum eine Relativbewegung zwischen der Werkstück-Halteanordnung und der jeweiligen Behandlungs- und/oder Bearbeitungseinrichtung möglich ist.

Für den speziellen Fall des Abblockens von optischen Werkstücken, wie Brillengläsern, von zugeordneten Blockstücken offenbart z.B. die Druckschrift DE 10 2009 048 590 A1 eine Abblockvorrichtung, umfassend eine erste Bewegungseinrichtung (Motorspindel mit Spannzange) zum Drehen des auf einem Blockstück geblockten Brillenglases um eine Werkstück-Drehachse als Bestandteil einer Werkstück-Halteanordnung der Abblockvorrichtung, eine Düsenbaugruppe mit einer Düse für die Abgabe eines Hochdruck-Wasserstrahls in einer Richtung im Wesentlichen quer zur Werkstück-Drehachse auf einen Randbereich zwischen Brillenglas und Blockstück als eine erste Behandlungseinrichtung der Abblockvorrichtung sowie eine zweite Bewegungseinrichtung zum Erzeugen einer Relativbewegung zwischen dem Brillenglas und der Düse entlang der Werkstück-Drehachse.

Dabei kann das Brillenglas bezüglich der Düse - oder umgekehrt die Düse bezüglich des Brillenglases - mittels der zweiten Bewegungseinrichtung lagegeregelt entlang der Werkstück-Drehachse verschoben werden, so dass der Hochdruck-Wasserstrahl auf eine vorbestimmte Auftreffstelle im Randbereich zwischen Brillenglas und Blockstück gerichtet ist. Hierdurch trifft der Hochdruck-Wasserstrahl nicht mehr oder weniger zufällig auf die Trennstelle zwischen Blockstück und Blockmaterial oder die Trennstelle zwischen Blockmaterial und Brillenglas, sondern kann infolge der relativen (Höhen)Verstellbarkeit von Düse und Blockstück CNC-technisch gezielt auf die jeweilige Trennstelle gerichtet werden, was ein schnelles Abblocken ermöglicht und diese Vorrichtung insbesondere für den Einsatz in RX-Werkstätten prädestiniert.

Darüber hinaus kann bei diesem Stand der Technik zum Reinigen des abgeblockten Brillenglases eine weitere Düse für die Abgabe eines weiteren, rotierenden Hochdruckstrahls als eine zweite Behandlungseinrichtung der Abblockvorrichtung vorgesehen sein, die insbesondere dazu dient, das am abgeblockten Brillenglas ggf. noch anhaftende Blockmaterial vom Brillenglas "abzuschälen". Einen weiteren Bestandteil der Werkstück-Halteanordnung bildet bei dieser vorbekannten Abblockvorrichtung eine Saugeinrichtung mit einem Saugkopf, der dazu dient, das Brillenglas beim Abblocken vom Blockstück an einer Stirnfläche des Brillenglases zu halten.

Ausgehend von diesem Stand der Technik offenbart die den Oberbegriff des Patentanspruchs 1 bildende Druckschrift DE 10 2017 001 679 A1 schließlich eine Vorrichtung zum Abblocken einer Linse von einem Blockstück, an dem die Linse mittels eines Blockmaterials geblockt ist, wobei eine Blockseite der Linse ggf. mit einer Schutzschicht oder -folie versehen ist. Diese vorbekannte Vorrichtung umfasst allgemein einen Arbeitsraum, eine erste Halteeinrichtung zur drehenden Halterung der Linse im Arbeitsraum, eine zweite Halteeinrichtung zur drehenden Halterung des Blockstücks im Arbeitsraum, und mehrere Düseneinrichtungen zur Abgabe von Fluidstrahlen im Arbeitsraum.

In dem Bestreben, ein schnelles Abblocken mit hohem Durchsatz zu ermöglichen, wird in diesem Stand der Technik u.a. vorgeschlagen, drei Düseneinrichtungen zur Erzeugung eines ersten, eines zweiten und eines zusätzlichen Fluidstrahls im Arbeitsraum vorzusehen, wobei der erste Fluidstrahl zum Lösen der Linse mit der Schutzschicht, sofern vorhanden, vom Blockmaterial, der zweite Fluidstrahl zum Entfernen von Blockmaterial von dem Blockstück und der zusätzliche Fluidstrahl zum Entfernen der Schutzschicht und/oder von Blockmaterial von der Linse eingesetzt werden kann.

Während bei diesem Stand der Technik die zweite Halteeinrichtung zur drehenden Halterung des Blockstücks in vorbestimmter Relativlage zu den drei Düseneinrichtungen ortsfest im Arbeitsraum angeordnet ist, kann die erste Halteeinrichtung zur drehenden Halterung der Linse im Arbeitsraum zusammen mit der abgeblockten Linse aus dem Arbeitsraum herausgeschwenkt, d.h. von dem abgeblockten Blockstück weggeschwenkt werden. Im Ergebnis ermöglicht die so ausgebildete Abblockvorrichtung ein Einlegen der am Blockstück aufgeblockten Linse in den Arbeitsraum, ein Abblocken der Linse von dem Blockstück im Arbeitsraum, ein Reinigen der abgeblockten Linse und des abgeblockten Blockstücks im Arbeitsraum, ein Entnehmen der abgeblockten Linse aus dem Arbeitsraum und ein Entnehmen des abgeblockten Blockstücks aus dem Arbeitsraum in einer sequentiellen Abfolge. Wünschenswert wäre indes ein höherer Durchsatz beim Abblocken einer Vielzahl von Linsen, wie sie in RX-Werkstätten anfallen.

Schließlich offenbart die Druckschrift US 2001/0051490 A1 ein Verfahren, bei dem rechte und linke Blockstücke für ein gemeinsames Rezept bzw. rechte und linke Brillenlinsen für eine gemeinsame Brillenfassung gleichzeitig spanend bearbeitet werden.

### AUFGABENSTELLUNG

Der Erfindung liegt speziell die Aufgabe zugrunde, eine Abblockvorrichtung und ein Verfahren zum Abblocken von optischen Werkstücken, insbesondere Brillengläsern, von zugeordneten Blockstücken anzugeben, die/das ein tunlichst schnelles Abblocken der Werkstücke ermöglicht. Allgemeiner liegt der Erfindung die Aufgabe zugrunde, eine Optikmaschine für das Behandeln und/oder Bearbeiten von optischen Werkstücken, insbesondere Brillengläsern, zu schaffen, mittels der in einem industriellen Fertigungsumfeld ein möglichst hoher Durchsatz von Werkstücken erzielbar ist.

### DARSTELLUNG DER ERFINDUNG

Diese Aufgabe wird allgemein durch eine Optikmaschine für das Behandeln und/oder Bearbeiten von optischen Werkstücken, wie Brillengläsern, mit den Merkmalen des Patentanspruchs 1 bzw. speziell durch eine Optikmaschine sowie ein Verfahren zum Abblocken von optischen Werkstücken, wie Brillengläsern, von zugeordneten Blockstücken mit den Merkmalen des Patentanspruchs 11 bzw. 17 gelöst. Vorteilhafte Ausgestaltungen der Erfindung sind Gegenstand der Unteransprüche.

Bei einer Optikmaschine für das Behandeln und/oder Bearbeiten von optischen Werkstücken, insbesondere Brillengläsern, umfassend ein Maschinengestell, eine am Maschinengestell bewegbar gelagerte Werkstück-Halteanordnung und wenigstens zwei am Maschinengestell montierte Behandlungs- und/oder Bearbeitungseinrichtungen zur Behandlung und/oder Bearbeitung eines in der Werkstück-Halteanordnung gehaltenen optischen Werkstücks, weist die Werkstück-Halteanordnung erfindungsgemäß eine Mehrzahl von Trennwänden auf, die wenigstens drei Arbeitsräume voneinander trennen und begrenzen, denen zur parallelen Nutzung für verschiedene optische Werkstücke jeweils ein Werkstückhalter zugeordnet ist, wobei die Arbeitsräume mit der Werkstück-Halteanordnung bezüglich des Maschinengestells bewegbar sind, so dass jeder Arbeitsraum wahlweise von einer am Maschinengestell ortsfesten Ladestation für das optische Werkstück zu den hiervon räumlich beabstandeten, die Behandlungs- und/oder Bearbeitungseinrichtungen umfassenden Behandlungs- und/oder Bearbeitungsstationen verlagerbar ist und umgekehrt.

Speziell im Falle einer Optikmaschine, die zum Abblocken von optischen Werkstücken, insbesondere Brillengläsern, von zugeordneten Blockstücken ausgebildet ist, umfassend eine Ladestation zum Beladen von auf Blockstücken aufgeblockten optischen Werkstücken vor dem Abblocken und/oder Entladen von abgeblockten optischen Werkstücken und/oder von Blockstücken nach dem Abblocken, eine Abblockstation als Behandlungsstation zum Abblocken der optischen Werkstücke vom jeweils zugeordneten Blockstück und eine Reinigungsstation als Behandlungsstation zum Reinigen der abgeblockten Werkstücke und/oder der Blockstücke, ist erfindungsgemäß jeder Arbeitsraum mit der Werkstück-Halteanordnung in einem Bewegungszyklus von der Ladestation, über die Abblockstation und die Reinigungsstation zur Ladestation verlagerbar, so dass die Arbeitsräume für verschiedene optische Werkstücke und unterschiedliche Vorgänge zeitgleich nutzbar sind.

Verfahrensseitig ist bei einem Verfahren zum Abblocken von optischen Werkstücken, insbesondere Brillengläsern, von zugeordneten Blockstücken, umfassend die folgenden Schritte: i) Einlegen eines an einem Blockstück aufgeblockten optischen Werkstücks in eine als Abblockvorrichtung ausgebildete Optikmaschine als erster Handhabungsschritt, ii) Abblocken des optischen Werkstücks von dem Blockstück in der Optikmaschine, iii) Entnehmen des abgeblockten optischen Werkstücks aus der Optikmaschine als zweiter Handhabungsschritt und iv) Entnehmen oder Ausgeben des vom optischen Werkstück getrennten Blockstücks aus der Optikmaschine als dritter Handhabungsschritt, gemäß der Erfindung ferner vorgesehen, dass der obige Abblockschritt ii) und wenigstens einer der obigen Handhabungsschritte i), iii) und iv) für verschiedene optische Werkstücke bzw. Blockstücke in ein und derselben Optikmaschine simultan ausgeführt werden und/oder dass nach dem Abblockschritt ii) und vor dem Handhabungsschritt iii) und/oder iv) das abgeblockte optische Werkstück und/oder das Blockstück einem Reinigungsschritt v) unterzogen werden, wobei der Reinigungsschritt v) und wenigstens der Abblockschritt ii) für verschiedene optische Werkstücke bzw. Blockstücke in ein und derselben Optikmaschine simultan ausgeführt werden.

Im Kern stellt die vorliegende Erfindung vorrichtungsseitig also darauf ab, eine gegenüber dem ortsfesten Maschinengestell der jeweiligen Optikmaschine bewegbare Werkstück-Halteanordnung vorzusehen, deren Besonderheit darin liegt, dass sie in ihrer räumlichen Ausgestaltung mehrere Arbeitsräume definiert, in denen zeitgleich an mehreren, am Maschinengestell verteilt angeordneten Behandlungs- und/oder Bearbeitungsstationen mehrere optische Werkstücke einer Behandlung und/oder Bearbeitung unterzogen werden können. Zeitlich parallel hierzu kann ein Arbeitsraum, in dem gerade keine Behandlung und/oder Bearbeitung der optische Werkstücke erfolgt, an der ebenfalls am Maschinengestell angeordneten, von den Behandlungs- und/oder Bearbeitungsstationen räumlich getrennten Ladestation mit neuen optischen Werkstücken beladen bzw. von bereits behandelten und/oder bearbeiteten optischen Werkstücken entladen werden. Hierbei ist jeder Arbeitsraum der Werkstück-Halteanordnung von Station zu Station bewegbar und wenigstens mit einem Werkstückhalter ausgerüstet, d.h. die räumlich voneinander getrennten Arbeitsräume sind also insofern gleich ausgebildet, so dass jeder Arbeitsraum an jeder der Stationen (Ladestation, Behandlungs- und/oder Bearbeitungsstationen) zum Einsatz kommen kann.

So kann etwa im Falle der vorbeschriebenen, als Abblockvorrichtung ausgebildeten Optikmaschine zur gleichen Zeit ein auf einem Blockstück aufgeblocktes erstes optisches Werkstück an der Ladestation in einen Arbeitsraum der Werkstück-Halteanordnung geladen und/oder ein abgeblocktes zweites optisches Werkstück und/oder ein abgeblocktes Blockstück an der Ladestation aus einem Arbeitsraum der Werkstück-Halteanordnung entladen werden, während ein drittes optisches Werkstück in einem an der Abblockstation befindlichen Arbeitsraum der Werkstück-Halteanordnung vom zugeordneten Blockstück abgeblockt und ein viertes optisches Werkstück in einem an der Reinigungsstation befindlichen Arbeitsraum der Werkstück-Halteanordnung gereinigt wird. Jedes einzelne optische Werkstück durchläuft hierbei in sequenzieller Weise die einzelnen Prozessschritte, welche für verschiedene optische Werkstücke indes simultan ablaufen.

Eine solche Ausgestaltung der als Abblockvorrichtung ausgebildeten Optikmaschine gestattet auch die Durchführung des erfindungsgemäßen Verfahrens, welches im Kern darauf abstellt, dass für verschiedene optische Werkstücke bzw. Blockstücke mindestens der Abblockschritt ii) zeitgleich mit wenigstens einem der Handhabungsschritte i), iii) und iv) und/oder dem Reinigungsschritt v) durchgeführt wird, so dass beim Abblocken wenigstens zwei Prozessschritte zeitlich parallel ablaufen. Dies ermöglicht gegenüber dem eingangs geschilderten Stand der Technik, bei dem es nicht möglich ist, während des Abblockens weitere Prozessschritte durchzuführen, schon eine erhebliche Steigerung des Durchsatzes von optischen Werkstücken. Werden neben dem Abblockschritt ii) sogar zwei oder mehr weitere Prozessschritte simultan ausgeführt, lässt sich der Durchsatz noch deutlich weiter steigern. Diese hohe Durchsatzleistung prädestiniert die erfindungsgemäße Optikmaschine und das erfindungsgemäße Abblockverfahren für eine Verwendung in einem industriellen Fertigungsumfeld, in dem eine sehr große Anzahl von optischen Werkstücken zur Behandlung bzw. Bearbeitung anfällt.

Neben dem Einsatz dieses Optikmaschinenkonzepts für das Abblocken von optischen Werkstücken von zugeordneten Blockstücken sind freilich auch andere Anwendungen in der Optikfertigung denkbar, bei denen verschiedene optische Werkstücke wenigstens zwei Behandlungs- und/oder Bearbeitungsschritten unterzogen werden. So kann die erfindungsgemäße Optikmaschine z.B. für das Vorranden (Cribbing) von optischen Linsen, insbesondere Brillengläsern, Verwendung finden. Eine solche Optikmaschine hat dann neben der Ladestation für das Laden von (vor)zurandenden optischen Linsen bzw. das Entladen von (vor)gerandeten optischen Linsen beispielsweise noch wenigstens zwei räumlich voneinander getrennte Bearbeitungsstationen mit zugeordneten Bearbeitungseinrichtungen, in denen ein erster spanender Randbearbeitungsschritt bzw. ein zweiter spanender Randbearbeitungsschritt erfolgt. Der erste spanende Randbearbeitungsschritt kann z.B. der Durchmesserreduktion eines runden Brillenglasrohlings dienen, während der zweite spanende Randbearbeitungsschritt etwa für eine erste Formanpassung der Randkontur des Brillenglasrohlings an eine von der Kreisform abweichende Form, in Annäherung an die spätere Fertigform des Brillenglases, und/oder zum Kantenbrechen am Brillenglasrohling vorgesehen ist. Diese Prozessschritte können mit dem erfindungsgemäßen Optikmaschinenkonzept für verschiedene optische Werkstücke zeitlich parallel ablaufen, ohne dass die optischen Werkstücke umgespannt werden müssen, so dass ein sehr hoher Durchsatz erzielbar ist. Die mit dem erfindungsgemäßen Optikmaschinenkonzept gegenüber den vorbekannten Optikmaschinen realisierbaren Zeit- und Durchsatzgewinne sind dann maximal, wenn die einzelnen Prozessschritte im Wesentlichen gleich lang sind, so dass an den einzelnen Behandlungs- und/oder Bearbeitungsstationen keine oder kaum Totzeiten entstehen, in denen keine Behandlung und/oder Bearbeitung der optischen Werkstücke erfolgt.

Ist bei einem der Behandlungs- und/oder Bearbeitungsschritte in den jeweiligen Behandlungs- und/oder Bearbeitungsstationen eine Relativbewegung zwischen dem optischen Werkstück und der jeweiligen Behandlungs- und/oder Bearbeitungseinrichtung wünschenswert oder erforderlich, so kann vorgesehen sein, dass die Werkstückhalter der Werkstück-Halteanordnung jeweils um ihre Längsachse drehbar gelagert sind, um diese Relativbewegung auf möglichst einfache Weise zu ermöglichen. Alternativ dazu können die Werkstückhalter der Werkstück-Halteanordnung bezüglich des jeweiligen Arbeitsraums aber auch feststehend ausgebildet sein, wenn die jeweilige Behandlungs- und/oder Bearbeitungseinrichtung die Relativbewegung bezüglich des optischen Werkstücks zu erzeugen vermag, z.B. durch "Umfahren" des am jeweiligen Werkstückhalter gehaltenen optischen Werkstücks.

In einer bevorzugten Ausgestaltung der Optikmaschine, deren Werkstück-Halteanordnung drehbare Werkstückhalter aufweist, sind die Werkstückhalter wahlweise um ihre Längsachse drehend antreibbar, wofür wenigstens einer der Behandlungs- und/oder Bearbeitungsstationen ein Drehantrieb zugeordnet ist, der am Maschinengestell montiert und vermittels einer Kupplung mit demjenigen Werkstückhalter antriebsverbindbar ist, der sich in der jeweiligen Behandlungs- und/oder Bearbeitungsstation befindet. So sind nur diejenigen Behandlungs- und/oder Bearbeitungsstationen mit einem ortsfesten Drehantrieb für die Werkstückhalter auszurüsten, an denen den jeweiligen Behandlungs- bzw. Bearbeitungserfordernissen entsprechend eine Drehbewegung des Werkstückhalters notwendig oder wünschenswert ist. Prinzipiell ist es zwar auch möglich, für jeden Werkstückhalter einen eigenen Drehantrieb vorzusehen, eine solche Ausgestaltung der Optikmaschine wäre jedoch ungleich aufwändiger, weil die Drehantriebe mit den Arbeitsräumen mit zu bewegen wären, was ggf. auch eine komplexe Energieführung bedingen würde, und eben jedem Arbeitsraum ein eigener Drehantrieb zuzuordnen wäre.

Grundsätzlich ist es denkbar, die einzelnen Arbeitsräume der Optikmaschine z.B. in einer Viereckanordnung mit zugeordneten linearen Bewegungsachsen, einem Kettenumlauf od.dgl. zu bewegen. Demgegenüber bevorzugt ist es indes, die Optikmaschine so auszubilden, dass die Arbeitsräume der Werkstück-Halteanordnung mit ihren Werkstückhaltern um eine gemeinsame Drehachse drehbar angeordnet sind. Dies gestattet einen sehr kompakten Aufbau der Optikmaschine mit vorteilhaft kurzen Wegen bei der Bewegung der Arbeitsräume und erleichtert zudem eine genaue Positionierung der Arbeitsräume an der jeweiligen Behandlungs- und/oder Bearbeitungsstation, auch weil die einzelnen, den Arbeitsräumen zugeordneten Komponenten, wie etwa die Werkstückhalter, bezogen auf die Drehachse an ihrer Position bleiben.

Zur genauen Positionierung der Arbeitsräume ist dann lediglich ein Winkelgeber an der Drehachse vorzusehen.

Im weiteren Verfolg des Erfindungsgedankens kann vorgesehen sein, dass die Werkstück-Halteanordnung trommelartig ausgebildet ist, mit zwei einander gegenüberliegenden Stirnwänden, zwischen denen die die Arbeitsräume trennenden Trennwände angeordnet sind, wobei die Drehachse durch die Stirnwände verläuft. Als Alternative hierzu ist eine Drehtelleranordnung denkbar, mit gleichmäßig um die Drehachse winkelbeabstandeten Werkstückhaltern auf einer Stirnseite des Drehtellers. Demgegenüber bietet die Trommelanordnung allerdings u.a. den Vorteil, dass die Trennung bzw. Begrenzung der einzelnen Arbeitsräume mittels der Trennwände zwischen den Stirnwänden einfacher auszuführen ist. In einer zweckmäßigen Ausgestaltung einer solchen Trommelanordnung kann vorgesehen sein, dass eine erste Stirnwand der Werkstück-Halteanordnung die Werkstückhalter trägt.

Den jeweiligen Behandlungs- bzw. Bearbeitungserfordernissen entsprechend kann die Optikmaschine des Weiteren so ausgestaltet sein, dass eine zweite Stirnwand der trommelartig ausgebildeten Werkstück-Halteanordnung Werkstückgegenhalter trägt, die mit den Werkstückhaltern ausgefluchtet sind. So ist es z.B. auf einfache Weise möglich, die optischen Werkstücke bei der jeweiligen Behandlung und/oder Bearbeitung durch Gegenhalten im jeweiligen Arbeitsraum zu sichern, was bei - einer ebenfalls denkbaren - "fliegenden", d.h. einseitigen Halterung der optischen Werkstücke an den Werkstückhaltern nicht möglich ist.

In einer bevorzugten Ausgestaltung der Optikmaschine sind die Werkstückgegenhalter der Werkstück-Halteanordnung jeweils um ihre Längsachse drehbar gelagert. Insbesondere kann dann auch vorgesehen sein, dass die Werkstückgegenhalter der Werkstück-Halteanordnung wahlweise um ihre Längsachse drehend antreibbar sind, wofür wenigstens einer der Behandlungs- und/oder Bearbeitungsstationen ein Drehantrieb zugeordnet ist, der am Maschinengestell montiert und vermittels einer Kupplung mit demjenigen Werkstückgegenhalter antriebsverbindbar ist, der sich in der jeweiligen Behandlungs- und/oder Bearbeitungsstation befindet. Die obigen Ausführungen zur bevorzugten rotativen Ausgestaltung und Anordnung der Werkstückhalter und deren Drehantrieb(en) gelten hier entsprechend.

Den jeweiligen Behandlungs- bzw. Bearbeitungserfordernissen entsprechend können ferner die Werkstückgegenhalter der Werkstück-Halteanordnung jeweils entlang ihrer Längsachse parallel zur Drehachse axial verlagerbar sein. Als Alternative (oder Ergänzung) hierzu können (auch) die Werkstückhalter der Werkstück-Halteanordnung jeweils entlang ihrer Längsachse parallel zur Drehachse axial verlagerbar sein. Dies ist jedoch insbesondere im Hinblick auf die Stabilität der Anordnung weniger bevorzugt.

In einer konkreten Ausgestaltung hierzu ist vorzugsweise vorgesehen, dass die Werkstückgegenhalter der Werkstück-Halteanordnung mittels eines jeweils zugeordneten Pneumatikzylinders unabhängig voneinander axial verlagerbar sind. Grundsätzlich ist es zwar auch möglich, die Axialbewegungen der Werkstückgegenhalter z.B. mittels elektrischer Antriebe zu erzeugen. Dies wäre jedoch mit einem höheren Aufwand verbunden, insbesondere wenn die Werkstückgegenhalter auch drehend ausgebildet sind. Das Vorsehen von Pneumatikzylindern bietet darüber hinaus - neben einem im Verhältnis geringen Bauraumbedarf - den Vorteil, dass über den gesamten Hub der Pneumatikzylinder eine konstante Kraft verfügbar ist, was der Feinfühligkeit der jeweiligen Axialbewegung förderlich ist.

Die Werkstückgegenhalter der Werkstück-Halteanordnung können ferner jeweils an ihrem in den jeweiligen Arbeitsraum hineinragenden Ende mit einem Saugkopf zum Halten des optischen Werkstücks versehen sein. Zwar ist es auch möglich, alternativ zum Saugkopf einen Greifer vorzusehen, was jedoch voraussetzt, dass der Rand des zu fassenden optischen Werkstücks nicht verdeckt ist. Demgegenüber gestattet der Saugkopf vorteilhaft einen Angriff an einer Stirnfläche des optischen Werkstücks. Außerdem ist ein Saugkopf vorteilhaft leicht und besitzt keine ggf. verschleißenden oder zu wartenden mechanisch bewegbaren Elemente.

was die Energieführung zu den insoweit beschriebenen pneumatischen Bauteilen angeht, kann des Weiteren vorgesehen sein, dass eine pneumatische Versorgung der mit der zweiten Stirnwand um die Drehachse drehbaren Pneumatikzylinder und/oder Saugköpfe für die Werkstückgegenhalter der Werkstück-Halteanordnung über eine gemeinsame Drehdurchführung erfolgt, die gegen ein Verdrehen gegenüber dem Maschinengestell abgestützt ist. In besonders einfacher, kompakter und servicefreundlicher Anordnung ist die gemeinsame Drehdurchführung bevorzugt an der zweiten Stirnwand, nahe den Werkstückgegenhaltern platziert. Die Drehdurchführung kann grundsätzlich aber auch an der ersten Stirnwand sitzen oder für die Pneumatikzylinder und Saugköpfe aufgeteilt an beiden Stirnwänden, was jedoch insbesondere im Hinblick auf den damit verbundenen Aufwand weniger bevorzugt ist.

Die Drehmomentübertragung vom jeweiligen Drehantrieb auf die Werkstückhalter und/oder die Werkstückgegenhalter betreffend kann vorgesehen sein, dass es sich bei der Kupplung den jeweiligen Behandlungs- oder Bearbeitungserfordernissen entsprechend um eine formschlüssige Kupplung oder eine kraftschlüssige Kupplung handelt. Wenn es bei der jeweiligen Behandlung bzw. Bearbeitung auf den Drehwinkel des am Werkstückhalter gehaltenen optischen Werkstücks ankommt, so ist eine formschlüssige Kupplung vorgesehen, beispielsweise mit einem werkstückhalterseitigen Kulissenstein, der in einer komplementär geformten Kulissennut eines am Drehantrieb vorgesehenen Mitnehmers formschlüssig eingreift. Kommt es hingegen bei der jeweiligen Behandlung bzw. Bearbeitung auf den Drehwinkel des am Werkstückhalter gehaltenen optischen Werkstücks nicht an, so kann als kraftschlüssige Kupplung z.B. eine Magnetkupplung vorgesehen sein, mit Kraftübertragung über einen Luftspalt.

Kommt das vorbeschriebene Maschinenkonzept etwa bei einer Optikmaschine, die zum Abblocken von optischen Werkstücken, namentlich Brillengläsern, von zugeordneten Blockstücken ausgebildet ist, zum Einsatz, so ist es bevorzugt, wenn die Abblockstation dieser Optikmaschine als erste Behandlungseinrichtung eine erste Düsenbaugruppe mit einer ersten Hochdruckdüse für die Abgabe eines Druckmittel-Hochdruckstrahls zum Abblocken der optischen Werkstücke vom jeweils zugeordneten Blockstück aufweist. Prinzipiell ist es zwar auch denkbar, die optischen Werkstücke von den zugeordneten Blockstücken mechanisch abzublocken, etwa unter Zuhilfenahme geeigneter Schneiden od.dgl., dies ist insbesondere im Hinblick auf die Prozesssicherheit bzw. eine gute Steuerbarkeit des Abblockprozesses jedoch weniger bevorzugt.

Für ein möglichst schnelles und zuverlässiges Abblocken mittels eines Druckmittel-Hochdruckstrahls ist es besonders bevorzugt, wenn die erste Hochdruckdüse für die Abgabe des Druckmittel-Hochdruckstrahls zum Abblocken der optischen Werkstücke vom jeweils zugeordneten Blockstück in ihrer axialen Lage und/oder ihrem Anstellwinkel bezüglich eines in der Abblockstation mittels der Werkstück-Halteanordnung gehaltenen, aufgeblockten optischen Werkstücks *in situ* einstellbar ist. Gegenüber der möglichen Alternative eines fluidischen Abblockens ohne entsprechende geometrische Einstellmöglichkeiten an der Hochdruckdüse bietet die obige Einstellmöglichkeit den Vorteil, dass während des Abblockprozesses der Druckmittel-Hochdruckstrahl gezielt auf eine bestimmte Stelle zwischen Werkstück und Blockstück gerichtet bzw. entsprechend nachgeführt werden kann, um das Abblocken zu beschleunigen.

Wiederum im Falle des Einsatzes des vorbeschriebenen Maschinenkonzepts bei einer als Abblockvorrichtung ausgebildeten Optikmaschine gilt das oben zur Abblockstation Gesagte für die Reinigungsstation der Optikmaschine entsprechend. So kann in der Reinigungsstation etwa eine mechanische Reinigung mittels z.B. Bürsten oder eine Reinigung mit Ultraschall erfolgen. Demgegenüber bevorzugt ist es allerdings, wenn die Reinigungsstation als zweite Behandlungseinrichtung eine zweite Düsenbaugruppe mit einer zweiten Hochdruckdüse für die Abgabe eines Druckmittel-Hochdruckstrahls zum Reinigen der abgeblockten Werkstücke und/oder der Blockstücke hat. Auch für eine Beschleunigung der Reinigungsvorgänge an Werkstück und Blockstück besonders bevorzugt ist es, wenn die Reinigungsstation als dritte Behandlungseinrichtung eine dritte Düsenbaugruppe mit einer dritten Hochdruckdüse für die Abgabe eines Druckmittel-Hochdruckstrahls zum Reinigen der Blockstücke und/oder der abgeblockten Werkstücke hat. So kann vorteilhaft etwa die zweite Hochdruckdüse auf das abgeblockte Werkstück gerichtet werden, während die dritte Hochdruckdüse auf das abgeblockte Blockstück zielt, so dass Werkstück und Blockstück gleichzeitig gereinigt werden.

In einer bevorzugten Ausgestaltung der als Abblockvorrichtung ausgebildeten Optikmaschine ist des Weiteren vorgesehen, dass die Ladestation eine erste Teilstation zum Beladen von auf Blockstücken aufgeblockten optischen Werkstücken vor dem Abblocken und zum Entladen von Blockstücken nach dem Abblocken sowie eine zweite Teilstation zum Entladen von abgeblockten optischen Werkstücken nach dem Abblocken aufweist. Gegenüber der möglichen Alternative einer Ladestation ohne zwei Teilstationen gestattet die obige Ausgestaltung der Optikmaschine vorteilhaft wiederum eine Parallelisierung der Prozesse, wobei etwa das Entladen eines abgeblockten optischen Werkstücks zeitgleich mit dem Entladen eines abgeblockten Blockstücks oder dem Beladen mit einem weiteren optischen Werkstück im aufgeblockten Zustand erfolgen kann.

Hierbei ist es besonders bevorzugt, wenn die zweite Teilstation zum Entladen von abgeblockten optischen Werkstücken nach dem Abblocken eine Einrichtung zum Trocknen der abgeblockten optischen Werkstücke als weitere Behandlungseinrichtung besitzt. So kann, wenn der obige Abblockschritt ii) und/oder der Reinigungsschritt v) unter Zuhilfenahme wenigstens eines Druckmittel-Hochdruckstrahls erfolgt, das abgeblockte optische Werkstück vorteilhaft beim Handhabungsschritt iii) zugleich mit getrocknet werden, so dass wiederum verschiedene Prozessschritte simultan ausgeführt werden.

Zum Trocknen des abgeblockten optischen Werkstücks kann z.B. ein Ansatz verfolgt werden, bei dem ein Abschleudern von Wassertropfen durch Drehantrieb des gehandhabten optischen Werkstücks oder ein automatisches Abwischen des optischen Werkstücks mit einem geeigneten textilen Material erfolgt. Insbesondere im Hinblick auf eine hohe Prozesssicherheit, namentlich eine geringe Gefahr, dass das abgeblockte optische Werkstück beim Trocknen eine Beschädigung erfährt, ist es demgegenüber indes bevorzugt, wenn die Einrichtung zum Trocknen der abgeblockten optischen Werkstücke einen Werkstückgreifer, mittels dessen ein abgeblocktes optisches Werkstück greifbar ist, und wenigstens eine Luftdüse besitzt, wobei der Werkstückgreifer und die Luftdüse relativ zueinander bewegbar sind, so dass zur Trocknung eines vom Werkstückgreifer gegriffenen abgeblockten optischen Werkstücks ein von der Luftdüse abgegebener Luftstrom über das optische Werkstück führbar ist bzw. streicht.

Insbesondere im Hinblick auf schnell aufeinander folgende Abblockprozesse für viele optische Werkstücke, ohne die Notwendigkeit, den Maschinenlauf öfter zu Wartungs- und Reinigungszwecken zu unterbrechen, ist es schließlich bevorzugt, wenn der Abblockstation und/oder der Reinigungsstation wenigstens eine separate Reinigungsdüse zur Abgabe eines Druckmittel-Niederdruckstrahls für die Reinigung der jeweiligen Station zugeordnet ist und/oder wenn unterhalb der Abblockstation und der Reinigungsstation ein trichterförmiger Gehäuseabschnitt zum gemeinsamen Sammeln von Druckmittel, Blockmaterial und sonstigen Rückständen zur Aufbereitung oder Entsorgung angeordnet ist.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise vereinfachten bzw. schematischen und nicht maßstabsgerechten Zeichnungen näher erläutert. In den Zeichnungen zeigen:

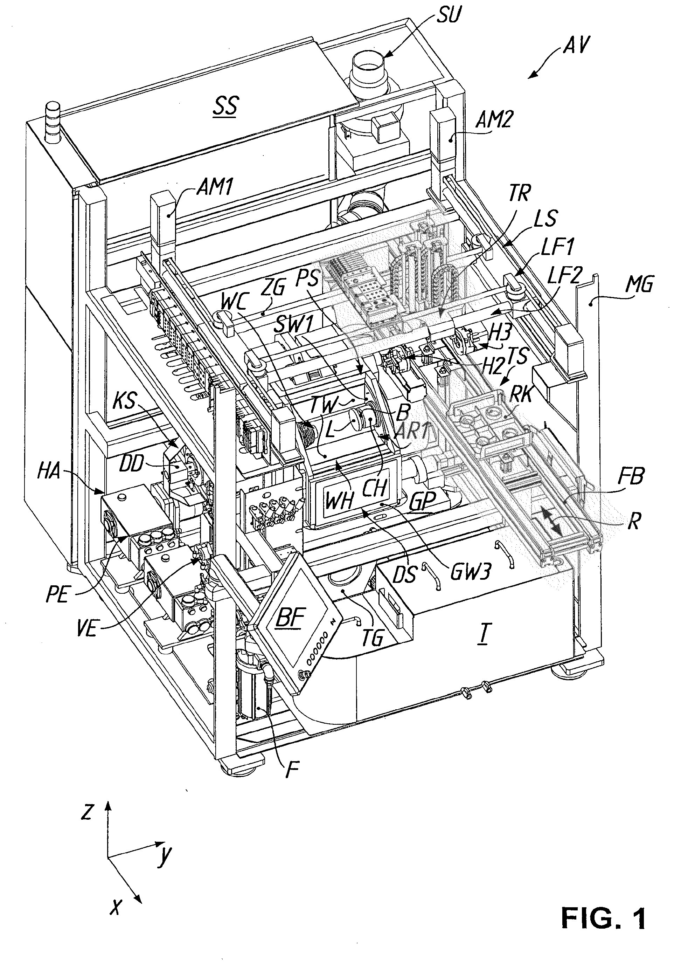

- Fig. 1: eine perspektivische Ansicht einer erfindungsgemäßen Abblockvorrichtung zum Abblocken von optischen Werkstücken, namentlich Brillengläsern, von zugeordneten Blockstücken von schräg oben / vorne links, mit Blick auf eine Ladestation zum Beladen von auf Blockstücken aufgeblockten Brillengläsern vor dem Abblocken und Entladen von abgeblockten Brillengläsern und Blockstücken nach dem Abblocken in bzw. aus Arbeitsräumen einer zentralen Werkstück-Halteanordnung;

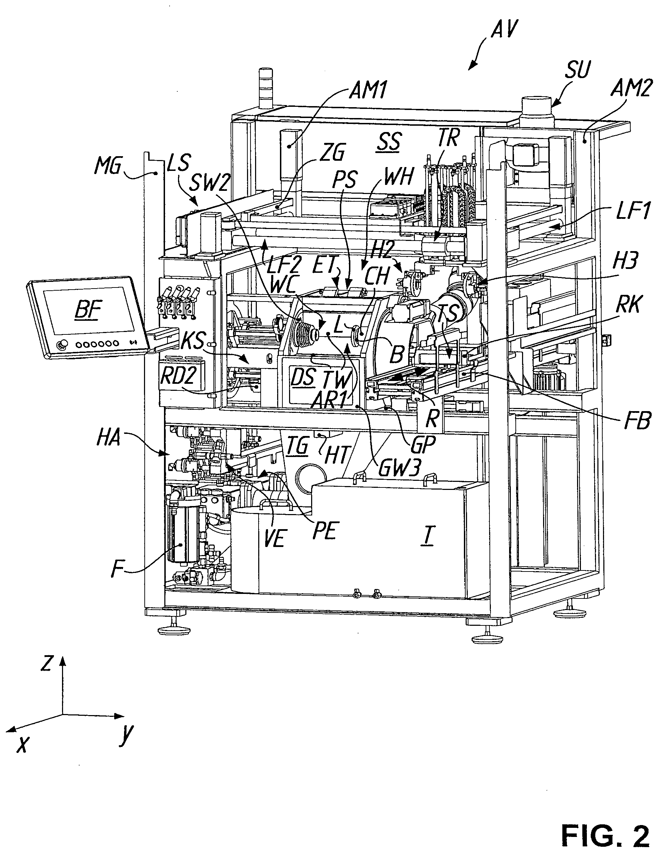

- Fig. 2: eine perspektivische Ansicht der Abblockvorrichtung gemäß Fig. 1 von schräg oben / vorne rechts;

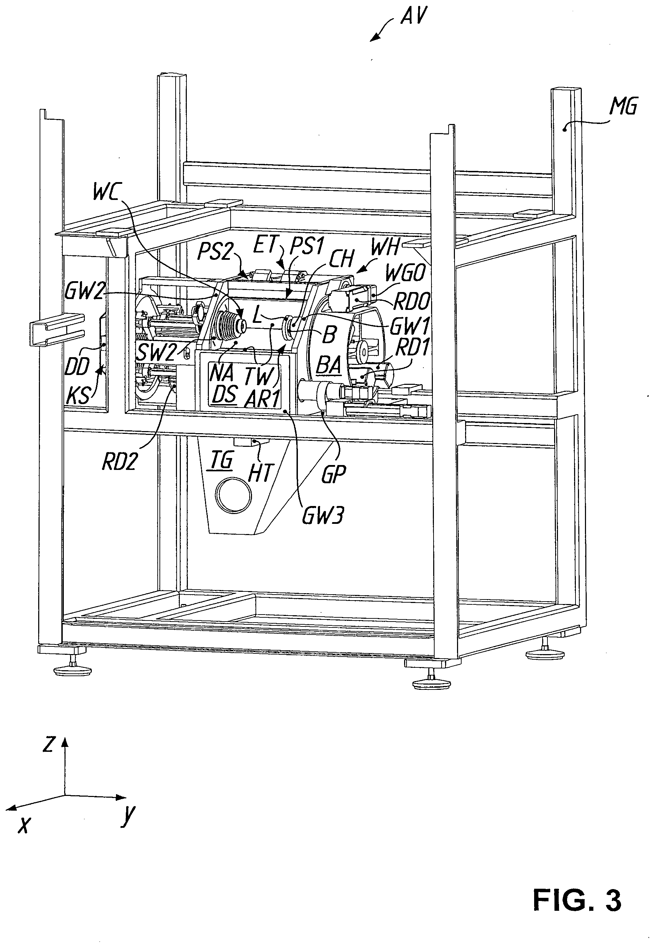

- Fig. 3: eine vom Blickwinkel her der Fig. 2 ähnliche perspektivische Ansicht der Abblockvorrichtung gemäß Fig. 1, wobei gegenüber der Darstellung in den Fig. 1 und 2 diverse Bauteile und -gruppen weggelassen wurden, um den Blick auf die in einem Maschinengestell montierte, trommelartig ausgebildete Werkstück-Halteanordnung mit den darum gruppierten Lade- bzw. Behandlungsstationen (Abblockstation, Reinigungsstation) und einen darunter liegenden trichterförmigen Gehäuseabschnitt freizugeben;

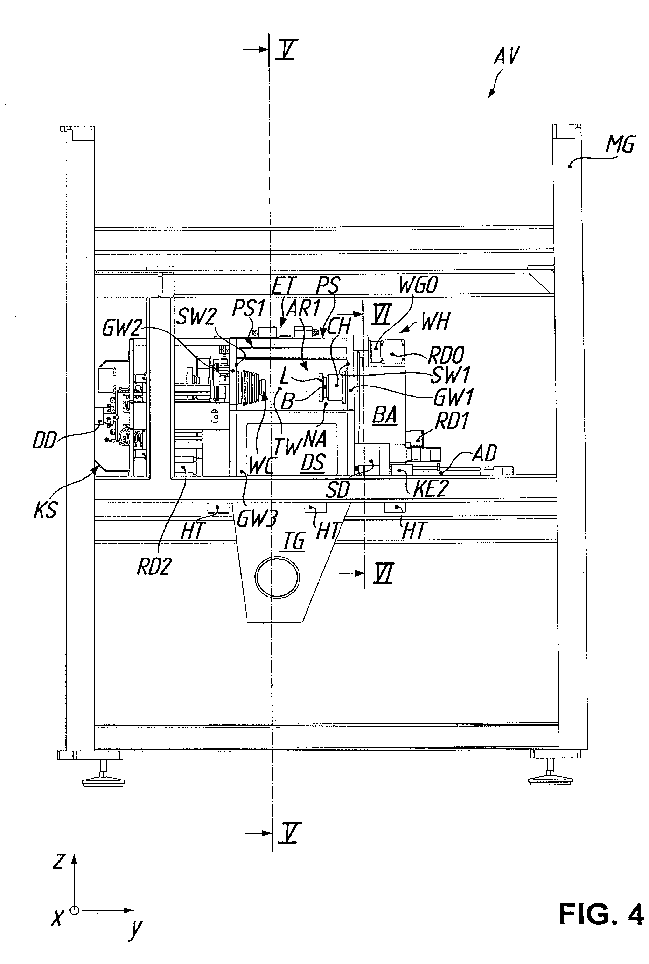

- Fig. 4: eine Vorderansicht der Abblockvorrichtung gemäß Fig. 1 mit den Vereinfachungen der Fig. 3;

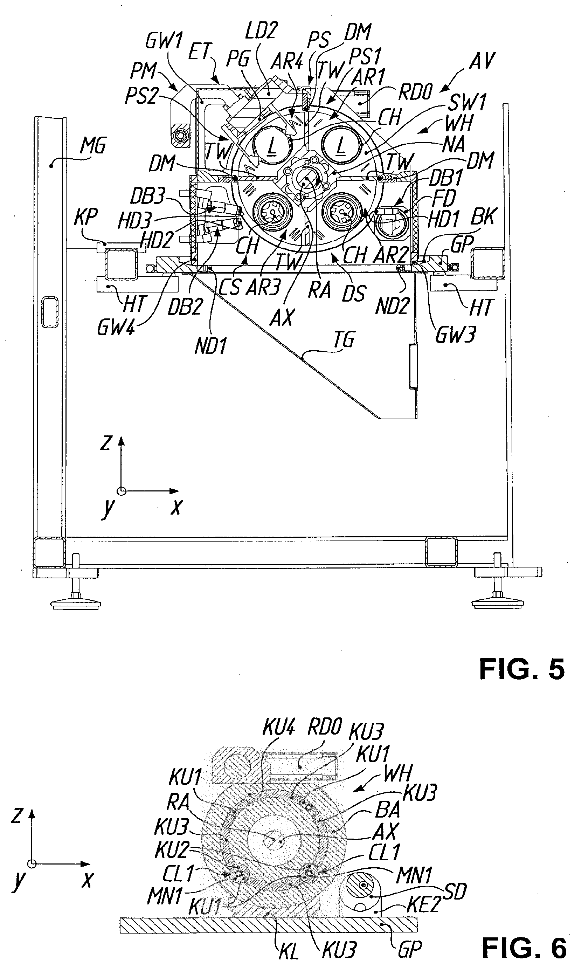

- Fig. 5: eine nach oben abgebrochene Schnittansicht der Abblockvorrichtung gemäß Fig. 1 entsprechend der Schnittverlaufslinie V-V in Fig. 4, mit Blick in vier durch Trennwände separierte Arbeitsräume der trommelartig ausgestalteten Werkstück-Halteanordnung und auf deren erste Stirnwand, die vier den Arbeitsräumen zugeordnete Werkstückhalter trägt;
- Fig. 6: eine Schnittansicht der vom Maschinengestell separierten Werkstück-Halteanordnung der Abblockvorrichtung gemäß Fig. 1 entsprechend der Schnittverlaufslinie VI-VI in Fig. 4;

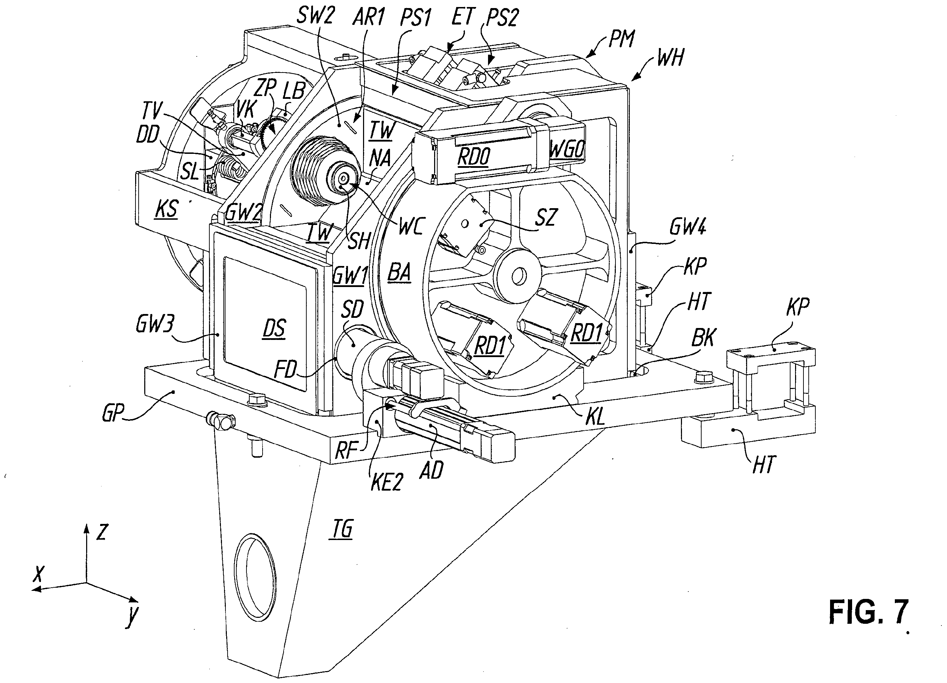

- Fig. 7: eine perspektivische Ansicht der vom Maschinengestell separierten Werkstück-Halteanordnung und des darunter liegenden trichterförmigen Gehäuseabschnitts der Abblockvorrichtung gemäß Fig. 1 von schräg oben / vorne rechts, mit Blick auf eine zweite Stirnwand der trommelartig ausgestalteten Werkstück-Halteanordnung und einen von vier an der zweiten Stirnwand gelagerten Werkstückgegenhaltern, die jeweils den Arbeitsräumen zugeordnet sind;

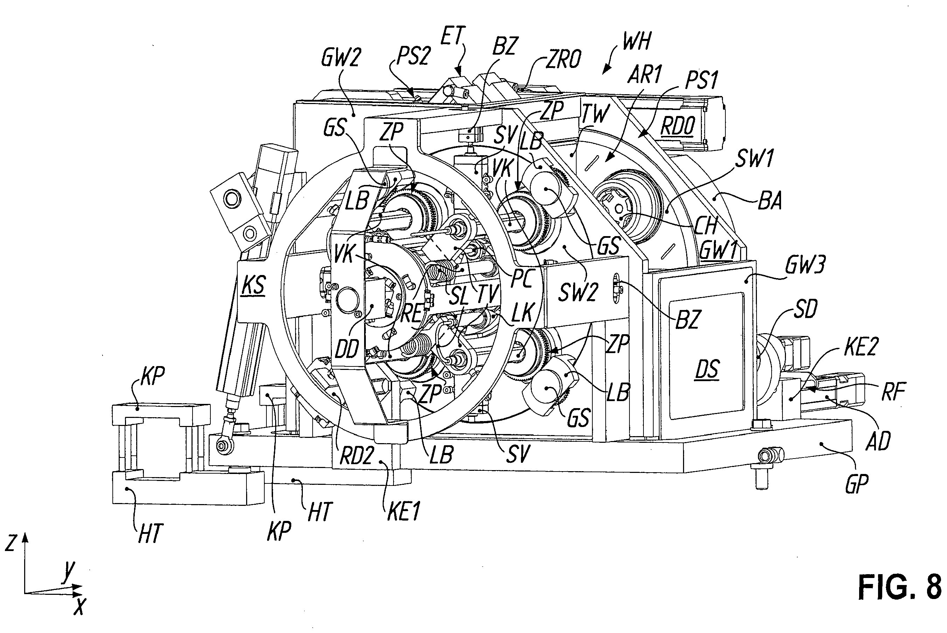

- Fig. 8: eine perspektivische Ansicht der vom Maschinengestell separierten Werkstück-Halteanordnung der Abblockvorrichtung gemäß Fig. 1 von schräg oben / vorne links, ohne den darunter liegenden trichterförmigen Gehäuseabschnitt, mit Blick auf eine von den Arbeitsräumen abgewandte Seite der in Fig. 7 gezeigten zweiten Stirnwand und eine daran montierte Lageranordnung für die Werkstückgegenhalter;

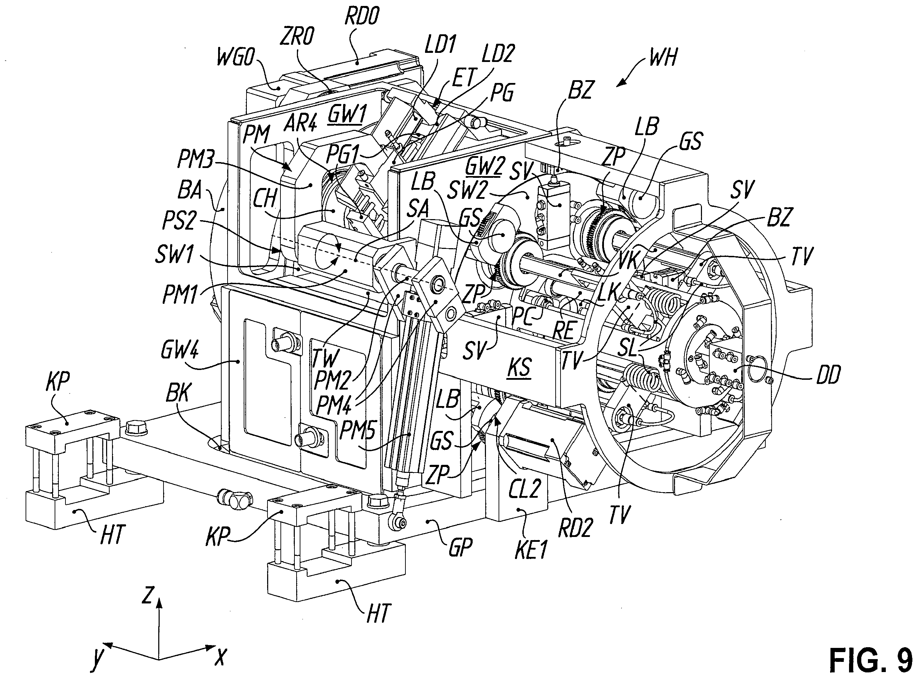

- Fig. 9: eine perspektivische Ansicht der vom Maschinengestell separierten Werkstück-Halteanordnung der Abblockvorrichtung gemäß Fig. 1 von schräg oben / hinten links, mit Blick auf eine zweite Teilstation der Ladestation, die einen Schwenkmechanismus mit einem Werkstückgreifer zum Entladen von abgeblockten Brillengläsern aufweist, der sich hier in einer Position befindet, in der der Werkstückgreifer in den der zweiten Teilstation der Ladestation gegenüberliegenden Arbeitsraum eingeschwenkt ist;

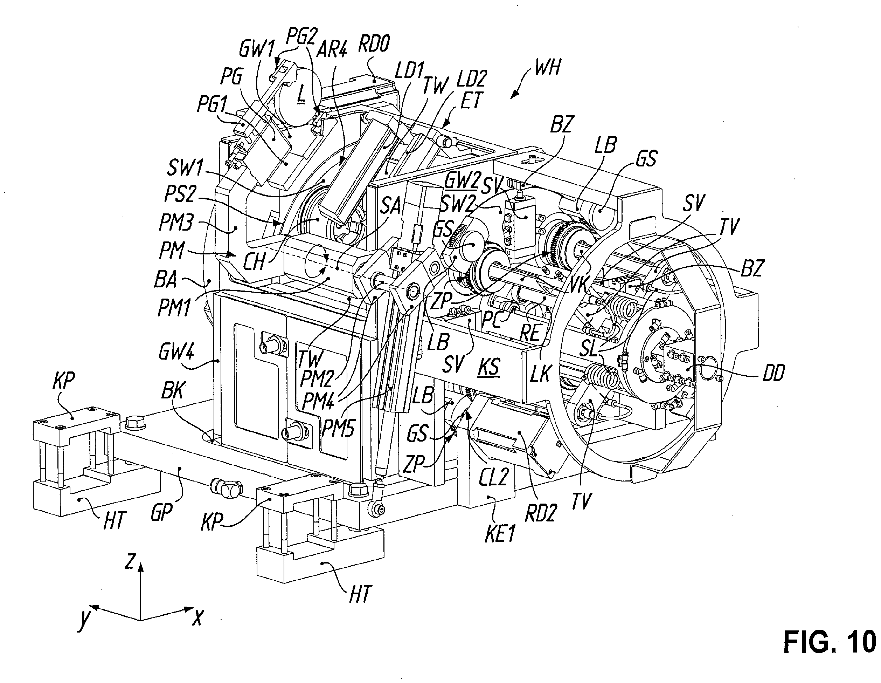

- Fig. 10: eine hinsichtlich des Blickwinkels der Fig. 9 entsprechende perspektivische Ansicht der vom Maschinengestell separierten Werkstück-Halteanordnung der Abblockvorrichtung gemäß Fig. 1, wobei sich der ein Brillenglas greifende Werkstückgreifer des Schwenkmechanismus in einer aus dem Arbeitsraum ausgeschwenkten Position befindet, so dass der Blick auf eine Einrichtung zum Trocknen des abgeblockten und gereinigten Brillenglases in der zweiten Teilstation der Ladestation freigegeben ist;

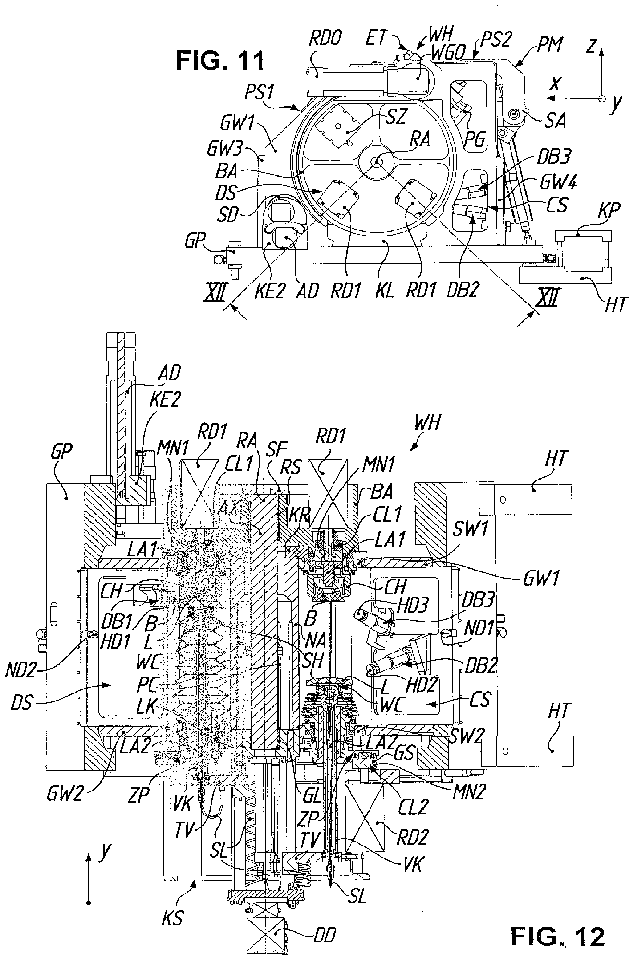

- Fig. 11: eine Seitenansicht der vom Maschinengestell separierten Werkstück-Halteanordnung der Abblockvorrichtung gemäß Fig. 1 von rechts in Fig. 4, mit den Vereinfachungen der Fig. 8;
- Fig. 12: eine Schnittansicht der Werkstück-Halteanordnung der Abblockvorrichtung gemäß Fig. 1 entsprechend der abgewinkelten Schnittverlaufslinie XII-XII in Fig. 11, mit Blick in die Abblockstation und die Reinigungsstation der Abblockvorrichtung;

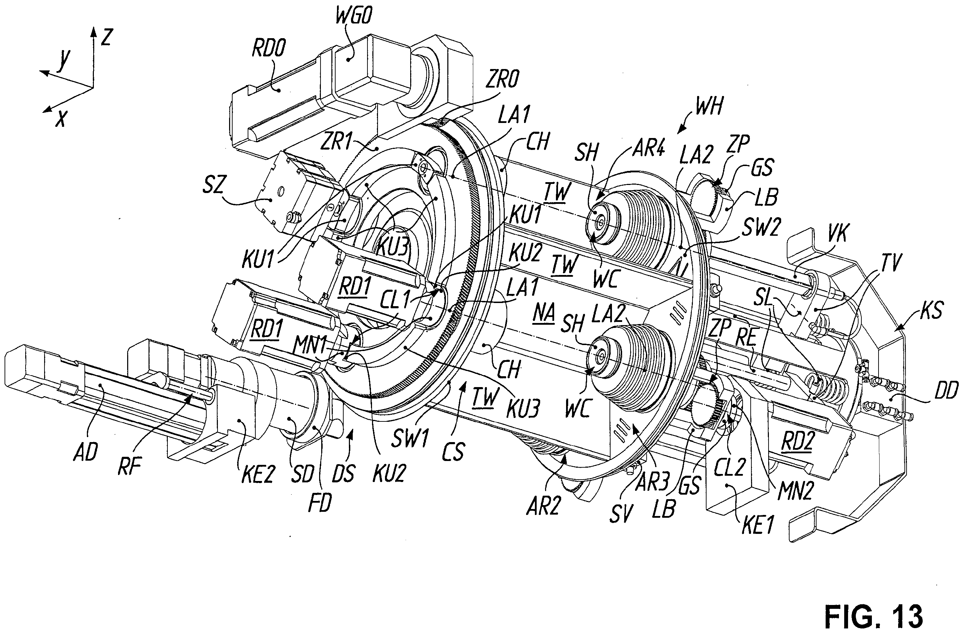

- Fig. 13: eine perspektivische Ansicht der vom Maschinengestell separierten Werkstück-Halteanordnung der Abblockvorrichtung gemäß Fig. 1 von schräg unten / hinten rechts, ohne ein ortsfestes Gehäuse für die WerkstückHalteanordnung, insbesondere zur Illustration von Drehantrieben für die Werkstückhalter an der ersten Stirnwand, die Werkstückgegenhalter an der zweiten Stirnwand und die trommelartige Werkstück-Halteanordnung insgesamt;

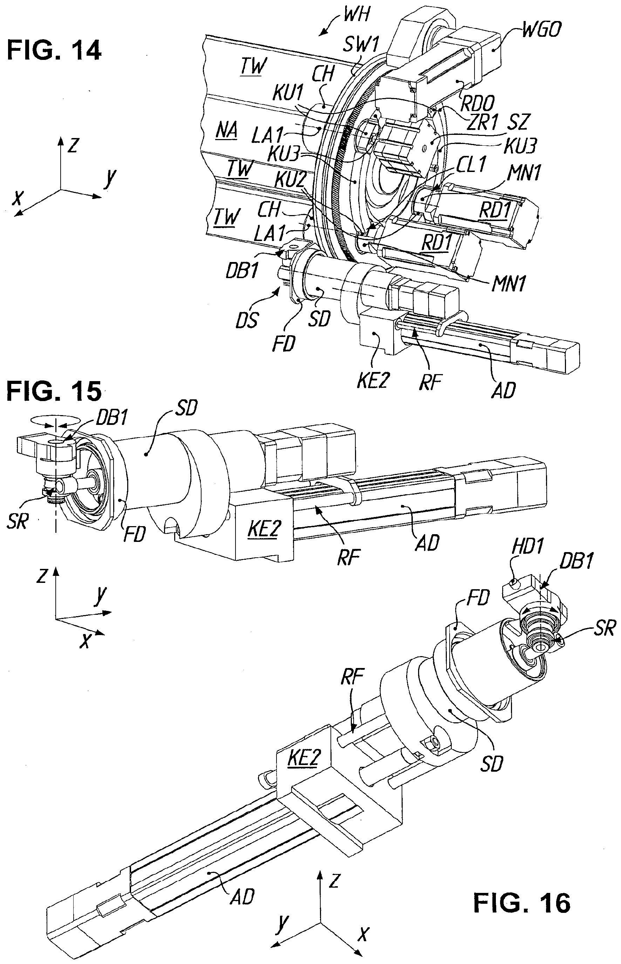

- Fig. 14: eine nach links abgebrochene, perspektivische Ansicht der vom Maschinengestell separierten Werkstück-Halteanordnung der Abblockvorrichtung gemäß Fig. 1 von schräg oben / vorne rechts, mit Blick auf eine Stelleinrichtung zur Einstellung einer axialen Lage und eines Anstellwinkels einer ersten Hochdruckdüse der Abblockstation;
- Fig. 15: eine perspektivische Ansicht der in Fig. 14 gezeigten, separierten Stelleinrichtung für die erste Hochdruckdüse der Abblockstation der Abblockvorrichtung gemäß Fig. 1 von schräg oben / vorne links;
- Fig. 16: eine perspektivische Ansicht der in Fig. 15 gezeigten, separierten Stelleinrichtung für die erste Hochdruckdüse der Abblockstation der Abblockvorrichtung gemäß Fig. 1 von schräg unten / hinten links;

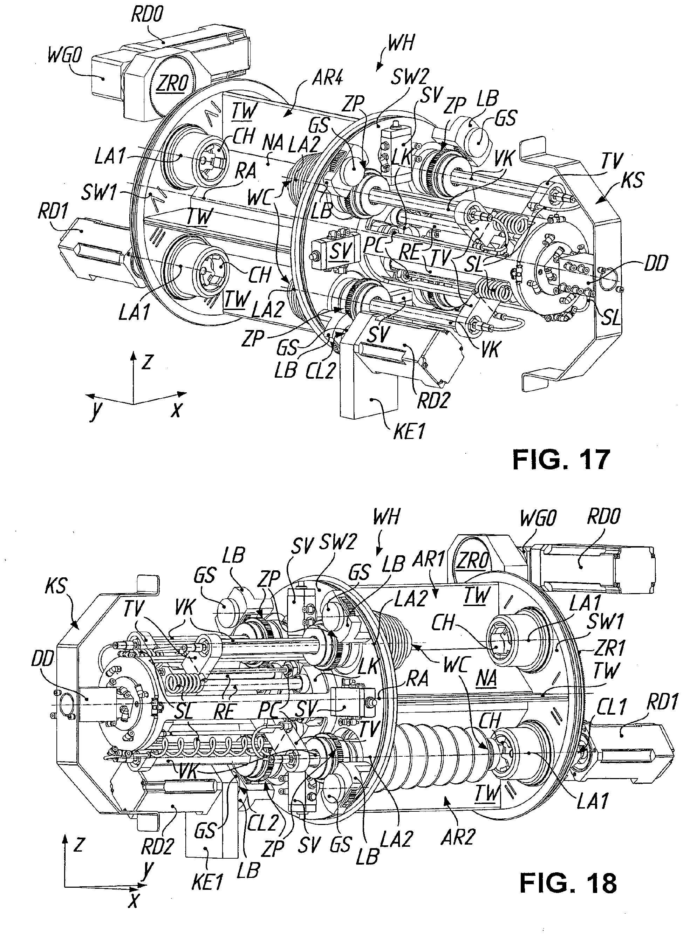

- Fig. 17: eine perspektivische Ansicht der vom Maschinengestell separierten Werkstück-Halteanordnung der Abblockvorrichtung gemäß Fig. 1 von schräg oben / hinten links, ohne das ortsfeste Gehäuse für die Werkstück-Halteanordnung, entsprechend der Darstellung in Fig. 13, mit Blick auf die von den Arbeitsräumen abgewandte Seite der zweiten Stirnwand der Werkstück-Halteanordnung;
- Fig. 18: eine perspektivische Ansicht der Werkstück-Halteanordnung der Abblockvorrichtung gemäß Fig. 1 von schräg oben / vorne links, mit den Vereinfachungen der Fig. 17, wobei sich der Werkstückgegenhalter im zweiten Arbeitsraum in einer mittels eines zugeordneten Pneumatikzylinders ausgefahrenen Position befindet;

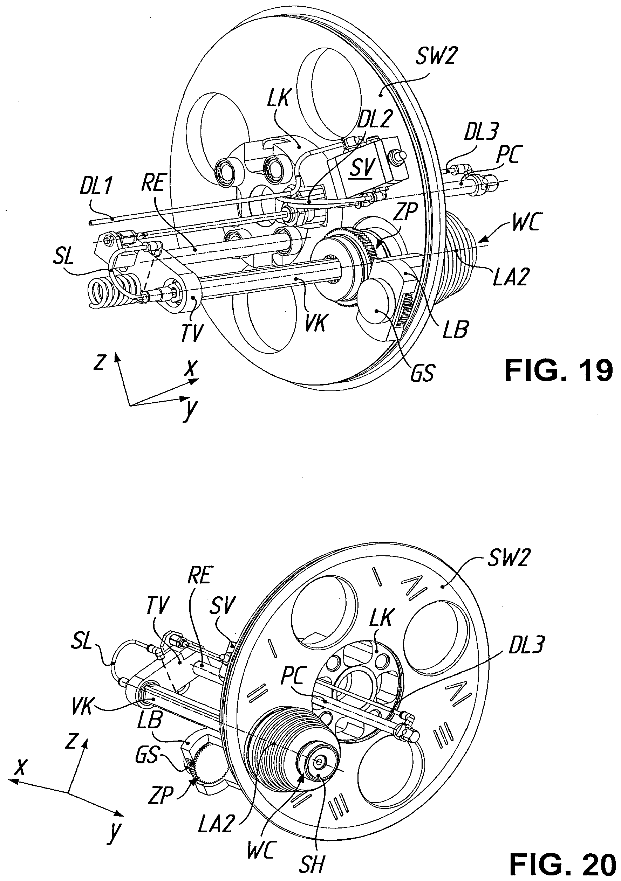

- Fig. 19: eine perspektivische Ansicht der zweiten Stirnwand der Werkstück-Halteanordnung der Abblockvorrichtung gemäß Fig. 1 von schräg oben / vorne links, wobei aus Gründen der besseren Übersichtlichkeit lediglich eine von vier Werkstückgegenhalter-Baugruppen gezeigt ist, die an der zweiten Stirnwand montiert sind;
- Fig. 20: eine perspektivische Ansicht der zweiten Stirnwand der Werkstück-Halteanordnung der Abblockvorrichtung gemäß Fig. 1 von schräg oben / vorne rechts, mit den Vereinfachungen der Fig. 19;

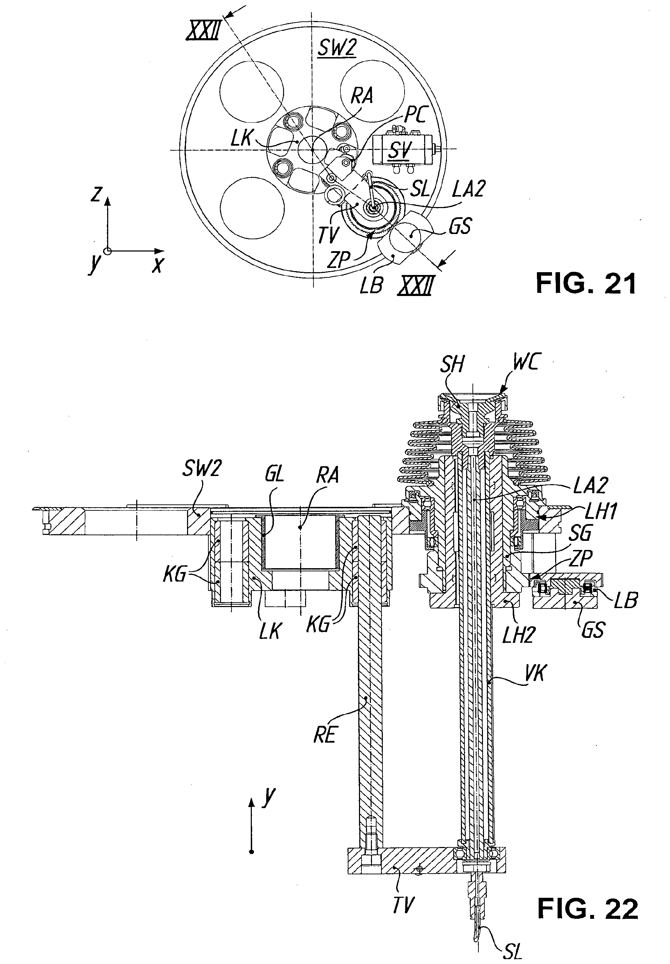

- Fig. 21: eine Seitenansicht der zweiten Stirnwand der Werkstück-Halteanordnung der Abblockvorrichtung gemäß Fig. 1 von links in Fig. 4, mit den Vereinfachungen der Fig. 19;
- Fig. 22: eine Schnittansicht der zweiten Stirnwand der Werkstück-Halteanordnung der Abblockvorrichtung gemäß Fig. 1 entsprechend der mehrfach abgewinkelten Schnittverlaufslinie XXII-XXII in Fig. 21, mit den Vereinfachungen der Fig. 19; und

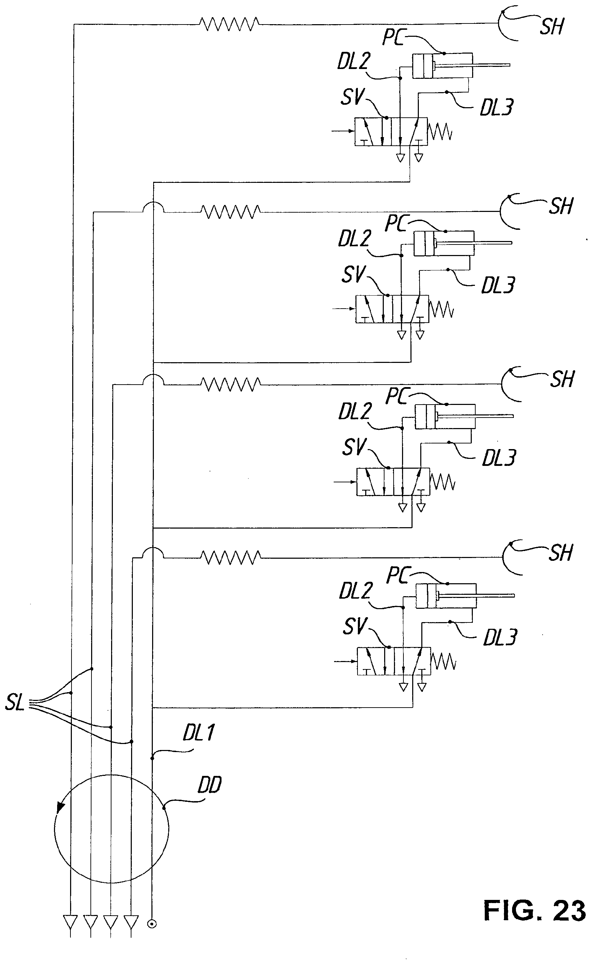

- Fig. 23: ein Schaltbild einer pneumatischen Versorgung für die Pneumatikzylinder und Saugköpfe für die Werkstückgegenhalter, die an der zweiten Stirnwand der WerkstückHalteanordnung der Abblockvorrichtung von Fig. 1 vorgesehen sind.

Zu den Zeichnungen sei an dieser Stelle noch angemerkt, dass die Darstellung der erfindungsgemäßen Abblockvorrichtung in einem rechtwinkligen kartesischen Koordinatensystem erfolgt, in welchem der Buchstabe x die Längenrichtung, der Buchstabe y die Breitenrichtung und der Buchstabe z die Höhenrichtung der Abblockvorrichtung bezeichnet. In den Zeichnungen wurden zur Freigabe der Sicht auf wesentliche Bauteile bzw. Baugruppen der Abblockvorrichtung und zur Vereinfachung der Darstellung zumeist insbesondere auch Teile der Verkleidung, die Versorgungseinrichtungen (einschließlich Leitungen, Schläuche und Rohre) für Strom, Druckluft und Wasser als Druckmittel, die Absaugung sowie die Mess-, Wartungs- und Sicherheitseinrichtungen weggelassen, weil sie für das Verständnis der Erfindung nicht erforderlich erscheinen und dem Fachmann ohnehin geläufig sind.

### DETAILLIERTE BESCHREIBUNG DES AUSFÜHRUNGSBEISPIELS

In den Fig. 1 bis 5 ist - beispielhaft für eine Optikmaschine zum Behandeln und/oder Bearbeiten von optischen Werkstücken - eine Abblockvorrichtung zum Abblocken von optischen Werkstücken, wie Brillengläsern L, von zugeordneten Blockstücken B allgemein mit dem Bezugszeichen AV beziffert. Die Abblockvorrichtung AV hat ein Maschinengestell MG, an dem als Kernstück der Abblockvorrichtung AV an zentraler Stelle eine besonders ausgebildete Werkstück-Halteanordnung WH bewegbar gelagert ist, die nachfolgend noch ausführlich beschrieben wird.

Wie insbesondere in Fig. 5 gut zu erkennen ist, sind um die Werkstück-Halteanordnung WH herum verschiedene Stationen der Abblockvorrichtung AV am Maschinengestell MG ortsfest gruppiert. Hierbei handelt es sich zunächst um eine oben liegende Ladestation PS, umfassend eine erste Teilstation PS1 (in Fig. 5 rechts) zum Beladen von auf Blockstücken B aufgeblockten Brillengläsern L vor dem Abblocken und zum Entladen von Blockstücken B nach dem Abblocken sowie eine zweite Teilstation PS2 (in Fig. 5 links) zum Entladen von abgeblockten Brillengläsern L nach dem Abblocken. Mit einem räumlichen Abstand zur Ladestation PS sind unterhalb der Ladestation PS eine Abblockstation DS (in Fig. 5 rechts) als erste Behandlungsstation zum Abblocken der Brillengläser L vom jeweils zugeordneten Blockstück B und eine Reinigungsstation CS (in Fig. 5 links) als weitere Behandlungsstation zum Reinigen der abgeblockten Brillengläser L und der Blockstücke B am Maschinengestell MG montiert.

Die Abblockstation DS weist gemäß insbesondere den Fig. 5, 12 und 14 bis 16 als eine erste Behandlungseinrichtung eine erste Düsenbaugruppe DB1 mit einer ersten Hochdruckdüse HD1 für die Abgabe eines Druckmittel-Hochdruckstrahls zum Abblocken der Brillengläser L vom jeweils zugeordneten Blockstück B auf. Wie später unter Bezugnahme auf die Fig. 14 bis 16 noch erläutert wird, ist die erste Düsenbaugruppe DB1 bewegbar am Maschinengestell MG montiert, so dass die erste Hochdruckdüse HD1 in ihrer axialen Lage und ihrem Anstellwinkel bezüglich eines in der Abblockstation DS mittels der Werkstück-Halteanordnung WH gehaltenen, aufgeblockten Brillenglases L *in situ* einstellbar ist.

Die Reinigungsstation CS hat gemäß insbesondere den Fig. 5 und 12 als eine zweite Behandlungseinrichtung eine zweite Düsenbaugruppe DB2 mit einer zweiten Hochdruckdüse HD2 für die Abgabe eines Druckmittel-Hochdruckstrahls zum Reinigen der abgeblockten Brillengläser L. Wie den Fig. 5 und 12 ebenfalls zu entnehmen ist, besitzt die Reinigungsstation CS ferner als eine dritte Behandlungseinrichtung eine dritte Düsenbaugruppe DB3 mit einer dritten Hochdruckdüse HD3 für die Abgabe eines Druckmittel-Hochdruckstrahls zum Reinigen der Blockstücke B. Die Hochdruckdüsen HD2, HD3 der Reinigungsstation CS sind bezüglich des Maschinengestells MG ortsfest montiert, gleichwohl ist eine begrenzte manuelle Einstellmöglichkeit der Hochdruckdüsen HD2, HD3 vorgesehen, um sie auf das abgeblockte Brillenglas L bzw. Blockstück B zu richten, welches in der Werkstück-Halteanordnung WH gehalten ist.

Die hydraulische Versorgung der Düsenbaugruppen DB1, DB2, DB3 erfolgt über eine Hydraulikanordnung HA, die gemäß den Fig. 1 und 2 in einem unteren Bereich, seitlich unterhalb der Werkstück-Halteanordnung WH am Maschinengestell MG montiert ist. Diese Hydraulikanordnung HA umfasst allgemein eine Pumpeneinrichtung PE, mittels der temperiertes Wasser als Druckmittel aus einem Tank T über eine Verteilereinrichtung VE der Hydraulikanordnung HA zu den Düsenbaugruppen DB1, DB2, DB3 gefördert werden kann. Außerdem sind an die Hydraulikanordnung HA Niederdruckdüsen ND1, ND2 angeschlossen, die gemäß den Fig. 5 und 12 der Abblockstation DS und der Reinigungsstation CS zugeordnet sind, um einen Druckmittel-Niederdruckstrahl für die Reinigung der jeweiligen Station DS, CS abzugeben.

Die Hydraulikanordnung HA ist Gegenstand der parallel, d.h. mit gleichem Anmeldetag unter dem Titel "Hydraulikanordnung für eine Vorrichtung zum Abblocken von optischen Werkstücken, insbesondere Brillengläsern, von zugeordneten Blockstücken" eingereichten deutschen Patentanmeldung DE 10 2019 006 505.0, auf die an dieser Stelle hinsichtlich des genaueren Aufbaus und der Funktion der Hydraulikanordnung HA zur Vermeidung von Wiederholungen ausdrücklich verwiesen sei.

Auf etwa gleicher Höhe wie die Werkstück-Halteanordnung WH ist in den Fig. 1 und 2 rechts neben der Werkstück-Halteanordnung WH eine Übergabestation TS für die Ablage von auf Blockstücken B aufgeblockten Brillengläsern L, abgeblockten Brillengläsern L und Blockstücken B angeordnet. Im dargestellten Ausführungsbeispiel weist die Übergabestation TS der Abblockvorrichtung AV ein am Maschinengestell MG montiertes Förderband FB zum Transport von Rezeptkästen RK in einer Transportrichtung R auf. Die Rezeptkästen RK dienen der Aufnahme von auf Blockstücken B aufgeblockten Brillengläsern L, abgeblockten Brillengläsern L und Blockstücken B.

Oberhalb der Werkstück-Halteanordnung WH und der Übergabestation TS ist am Maschinengestell MG ein Ladesystem LS montiert, mittels dessen die auf Blockstücken B aufgeblockten Brillengläser L, abgeblockte Brillengläser L und Blockstücke B zwischen der Übergabestation TS und der an der Werkstück-Halteanordnung WH vorgesehenen Ladestation PS transportiert und in die bzw. aus der jeweilige(n) Station TS, PS eingelegt bzw. entnommen werden können. Das Ladesystem LS umfasst allgemein einen in einer Bewegungsebene x-y über zwei Linearführungseinheiten LF1, LF2 bewegbaren Träger TR, der drei in einer Querrichtung z zur Bewegungsebene x-y bewegbare Halter H1, H2, H3 trägt. Von diesen ist ein erster Halter H1 (in den Fig. 1 und 2 verdeckt) den auf Blockstücken B aufgeblockten Brillengläsern L, ein zweiter Halter H2 den abgeblockten Brillengläsern L und ein dritter Halter H3 den Blockstücken B zugeordnet. Eine Besonderheit dieses Ladesystems LS besteht darin, dass die Linearführungseinheiten LF1, LF2 in der Art eines H-Portals ausgebildet und angeordnet sind, mit zwei ortsfesten Antriebsmotoren AM1, AM2 für den gleich- oder gegensinnigen Antrieb eines Zugglieds ZG, das in einer H-Form an den Linearführungseinheiten LF1, LF2 bewegbar angeordnet und am Träger TR befestigt ist.

Das Ladesystem LS ist Gegenstand der parallel, d.h. mit gleichem Anmeldetag unter dem Titel "Ladesystem für eine Optikmaschine, insbesondere zum Laden und Entladen optischer Werkstücke, wie Brillengläser, und Abblockvorrichtung umfassend ein solches Ladesystem" eingereichten deutschen Patentanmeldung DE 10 2019 006 503.4, auf die an dieser Stelle hinsichtlich des genaueren Aufbaus und der Funktion des Ladesystems LS zur Vermeidung von Wiederholungen ausdrücklich verwiesen sei.

Die Fig. 1 und 2 zeigen des Weiteren einen hinter dem Maschinengestell MG angeordneten Schaltschrank SS für die Abblockvorrichtung AV sowie eine rechts daneben platzierte Absaugung SU, die an die zweite Teilstation PS2 der Ladestation PS und die Reinigungsstation CS angeschlossen ist (die entsprechenden Gehäusefenster sind in Fig. 5 im Hintergrund an den jeweiligen Stationen zu erkennen). Unterhalb der Abblock- und Reinigungsstationen DS, CS - die selbst für eine bestmögliche Ableitung des im Prozess benötigten Wassers unterhalb der Ladestation PS positioniert sind - ist ein trichterförmiger Gehäuseabschnitt TG zum gemeinsamen Sammeln von Druckmittel, Blockmaterial und sonstigen Rückständen zur Aufbereitung bzw. Entsorgung angeordnet, wie in den Fig. 1 bis 5 und 7 zu sehen ist. In den Fig. 1 und 2 vorne links ist schließlich ein Bedienfeld BF am Maschinengestell MG befestigt, über das die Abblockvorrichtung AV gesteuert werden kann.

Weitere Details der Werkstück-Halteanordnung WH sind den Fig. 5 bis 14 und 17 bis 22 zu entnehmen. Wie zunächst insbesondere die Fig. 5 zeigt, besteht eine Besonderheit der Werkstück-Halteanordnung WH darin, dass die Werkstück-Halteanordnung WH eine Mehrzahl von Trennwänden TW aufweist, die vier Arbeitsräume AR1, AR2, AR3, AR4 voneinander trennen und begrenzen (in den Figuren auch durch die jeweils stirnseitig angebrachten römischen Ziffern I I, II II, III III, IV IV gekennzeichnet). Dabei ist zur parallelen Nutzung für verschiedene Brillengläser L jedem Arbeitsraum AR1, AR2, AR3, AR4 ein eigener Werkstückhalter CH zugeordnet, hier jeweils in der Form einer Spannzange. Wie nachfolgend noch näher erläutert wird, können die Arbeitsräume AR1, AR2, AR3, AR4 mit der Werkstück-Halteanordnung WH bezüglich des Maschinengestells MG bewegt werden, so dass jeder Arbeitsraum AR1, AR2, AR3, AR4 wahlweise von der am Maschinengestell MG ortsfesten Ladestation PS zu den hiervon räumlich beabstandeten Behandlungs- bzw. Bearbeitungsstationen DS, CS verlagert werden kann und umgekehrt. Genauer gesagt kann jeder Arbeitsraum AR1, AR2, AR3, AR4 mit der Werkstück-Halteanordnung WH in einem Bewegungszyklus (durch einen zentralen Rundpfeil in Fig. 5 angedeutet) von der ersten Teilstation PS1 der Ladestation PS (Quadrant oben rechts in Fig. 5) über die Abblockstation DS (Quadrant unten rechts), die Reinigungsstation CS (Quadrant unten links) und die zweite Teilstation PS2 der Ladestation PS (Quadrant oben links) wieder zur ersten Teilstation PS1 der Ladestation PS verlagert werden, so dass die Arbeitsräume AR1, AR2, AR3, AR4 für verschiedene Brillengläser L und unterschiedliche Vorgänge (Beladen, Abblocken, Reinigen, Entladen) zeitgleich genutzt werden können.

Hierfür sind die Arbeitsräume AR1, AR2, AR3, AR4 der Werkstück-Halteanordnung WH mit ihren Werkstückhaltern CH um eine gemeinsame Drehachse RA drehbar angeordnet. Insgesamt ergibt sich eine trommelartige Ausbildung der Werkstück-Halteanordnung WH, wie gut in den Fig. 13, 17 und 18 zu sehen ist, mit zwei einander gegenüberliegenden Stirnwänden SW1, SW2, zwischen denen die die Arbeitsräume AR1, AR2, AR3, AR4 separierenden Trennwände TW angeordnet sind. Hierbei verläuft die Drehachse RA durch die zueinander parallelen Stirnwände SW1, SW2, die gemäß insbesondere den Fig. 5 und 12 über einen zentralen Nabenabschnitt NA fest miteinander verbunden sind.

Während eine erste Stirnwand SW1 der trommelartig ausgestalteten Werkstück-Halteanordnung WH die Werkstückhalter CH trägt, wie in den Fig. 17 und 18 gut zu erkennen ist, trägt eine zweite Stirnwand SW2 der Werkstück-Halteanordnung WH gemäß z.B. Fig. 13 Werkstückgegenhalter WC, die mit den Werkstückhaltern CH ausgefluchtet sind. Diese Ausrichtung der Werkstückhalter CH und der Werkstückgegenhalter WC, die über die Genauigkeit der Fertigungsteile der Werkstück-Halteanordnung WH erfolgt, bleibt stets erhalten, selbst bei einem Austausch des jeweiligen Werkstückhalters CH bzw. Werkstückgegenhalters WC. Sowohl die Werkstückhalter CH als auch die Werkstückgegenhalter WC sind ferner jeweils um ihre Längsachse LA1 bzw. LA2 drehbar gelagert. Mit anderen Worten gesagt ergibt sich eine zirkulare Anordnung von vier Spindelpaaren, die um die Drehachse RA gleichmäßig voneinander winkelbestandet sind. Zudem sind die Werkstückgegenhalter WC jeweils entlang ihrer Längsachse LA2 parallel zur Drehachse RA axial verlagerbar. Hierbei sind die Werkstückgegenhalter WC jeweils an ihrem in den jeweiligen Arbeitsraum AR1, AR2, AR3, AR4 hineinragenden Ende mit einem Saugkopf SH zum Halten des Brillenglases L versehen.

Bevor weitere Details zu den Werkstückhaltern CH und den Werkstückgegenhaltern WC sowie deren Bewegungsmöglichkeiten in Relation zu den Stirnwänden SW1, SW2 besprochen werden, sollen zunächst der Drehantrieb und die Drehlagerung der gesamten Werkstück-Halteanordnung WH im Maschinengestell MG näher erläutert werden. Wie am besten in den Fig. 5 bis 11 zu erkennen ist, weist die Abblockvorrichtung AV als Träger eine Grundplatte GP auf, die über Halter HT und Klemmplatten KP mit dem Maschinengestell MG verschraubt ist. An dieser Grundplatte GP werden alle Bauteile und Baugruppen der darüber liegenden Stationen PS, DS, CS und der Werkstück-Halteanordnung WH der Abblockvorrichtung AV montiert. Somit gibt die Grundplatte GP die Genauigkeit der gesamten Abblockvorrichtung AV vor; die benötigten Montageflächen befinden sich alle auf der gleichen Seite der Grundplatte GP und werden im gleichen Arbeitsschritt bearbeitet. Eine als Drehteil ausgeführte Basis BA zur Lagerung der Werkstück-Halteanordnung WH ist über einen Klotz KL mit der Grundplatte GP verschraubt. Ebenso ist ein Gehäuse für die Werkstück-Halteanordnung WH an der Grundplatte GP befestigt, das (u.a.) eine der bewegbaren ersten Stirnwand SW1 der Werkstück-Halteanordnung WH zugeordnete erste Gehäusewand GW1 und eine der bewegbaren zweiten Stirnwand SW2 der Werkstück-Halteanordnung WH zugeordnete zweite Gehäusewand GW2 besitzt. Jede der Gehäusewände GW1, GW2 ist mit einer zentralen, runden Öffnung versehen, in der die jeweilige runde Stirnwand SW1, SW2 der Werkstück-Halteanordnung WH drehbar und geeignet gegen die entsprechende Gehäusewand GW1, GW2 abgedichtet (siehe Fig. 12) aufgenommen ist.

Die Werkstück-Halteanordnung WH ist gemäß Fig. 12 mit ihrem zentralen Nabenabschnitt NA einseitig über ein Kreuzrollenlager KR drehbar an der Basis BA gelagert. Hierbei sind ein Außenring des Kreuzrollenlagers KR mit der Basis BA und ein Innenring des Kreuzrollenlagers KR mit dem Nabenabschnitt NA verschraubt. Im Zentrum des Nabenabschnitts NA befindet sich noch eine Achse AX, die zur zusätzlichen Abstützung der Werkstück-Halteanordnung WH dient. Die Achse AX ist mittels eines Spannflanschs SF und eines Ringfeder-Spannelements RS an der Basis BA befestigt. Am von der Basis BA abgewandten Ende der Achse AX kann sich die Werkstück-Halteanordnung WH über ein Gleitlager GL auf der Achse AX abstützen.

Zum rotativen Antrieb der Werkstück-Halteanordnung WH um die Drehachse RA ist gemäß insbesondere den Fig. 3, 4, 6 und 7 ein Servomotor RD0 mit einem Winkelgetriebe WG0 vorgesehen, der oben an der Basis BA befestigt ist. Wie die Fig. 13, 14, 17 und 18 veranschaulichen, treibt das Winkelgetriebe WG0 ein schrägverzahntes Zahnrad ZR0 an, das mit einem größeren schrägverzahnten Zahnrad ZR1 kämmt. Letzteres ist auf der von den Arbeitsräumen AR1, AR2, AR3, AR4 abgewandten Seite an der ersten Stirnwand SW1 der Werkstück-Halteanordnung WH befestigt. An dieser Stelle ist ein sehr hohes Übersetzungsverhältnis (z.B. 1:275) vorgesehen, um ein Trägheitsmomentenverhältnis (ca. 1:25) zu erreichen, bei welchem schnelle Bewegungen und genaue Positionierungen der Werkstück-Halteanordnung WH möglich sind.

Die Werkstückhalter CH der Werkstück-Halteanordnung WH können um ihre Längsachse LA1 drehend angetrieben werden, wofür der Abblockstation DS und der Reinigungsstation CS jeweils ein Drehantrieb RD1 zugeordnet ist. Beide Drehantriebe RD1 sind ortsfest am Maschinengestell MG montiert, genauer an der damit verbundenen Basis BA angeflanscht, und können vermittels einer Kupplung CL1 mit demjenigen Werkstückhalter CH antriebsverbunden werden, der sich in bzw. an der jeweiligen Station DS, CS befindet.

Diesbezügliche Details sind insbesondere den Fig. 6, 13 und 14 zu entnehmen. Demgemäß handelt es sich bei den Kupplungen CL1 um formschlüssige Kupplungen. Diese sind jeweils durch einen bogenförmigen Kulissenstein KU1 und eine hierzu komplementär geformte Kulissennut KU2 gebildet. Während der Kulissenstein KU1 zusammen mit dem jeweiligen Werkstückhalter CH bezüglich der ersten Stirnwand SW1 der Werkstück-Halteanordnung WH um die Längsachse LA1 drehen kann, ist die Kulissennut KU2 in einem mit dem jeweiligen Drehantrieb RD1 verbundenen Mitnehmer MN1 vorgesehen, der gemäß Fig. 6 eine jeweils zugeordnete runde Öffnung in der Basis BA durchgreift. Komplettiert wird die Kulisse durch entsprechend gekrümmte, ringsegmentförmige Kulissenelemente KU3, die in Umfangsrichtung gesehen zwischen den Kulissensteinen KU1 an der ersten Stirnwand SW1 befestigt sind. Die Kulissensteine KU1 sind, ebenso wie die Kulissenelemente KU3, in einer Ringnut KU4 der Basis BA geführt, wie die Fig. 6 zeigt, die lediglich von den Öffnungen zur Aufnahme der Mitnehmer MN1 unterbrochen ist.

Für den Fachmann ist ersichtlich, dass sich insgesamt eine ringförmig umlaufende Kulissenbahn ergibt. Befindet sich die Werkstück-Halteanordnung WH in einer Winkelposition um die Drehachse RA, in der die Werkstückhalter CH ihre jeweilige Arbeitsposition in den Stationen LS1, DS, CS bzw. LS2 der Abblockvorrichtung AV noch nicht erreicht oder schon verlassen haben, so werden die Mitnehmer MN1 der Drehantriebe RD1 über die Kulissenelemente KU3 (winkel)geführt, während die Kulissensteine KU1 an den Werkstückhaltern CH in der Ringnut KU4 der Basis BA (winkel)geführt sind. Beim Erreichen der Arbeitsposition am jeweiligen Drehantrieb RD1 wird der Kulissenstein KU1 des entsprechenden Werkstückhalters CH in die Kulissennut KU2 am Mitnehmer MN1 des jeweiligen Drehantriebs RD1 eingeschwenkt und somit die Kupplung CL1 eingekuppelt. Zum Weiterschwenken der Werkstück-Halteanordnung WH um die Drehachse RA ist der jeweilige Drehantrieb RD1 mit seinem Mitnehmer MN1 freilich so im Drehwinkel zu positionieren, dass sich wieder eine umlaufende Kulissenbahn ergibt, so dass die Kupplung CL1 auskuppeln kann und die weitere Drehbewegung der Werkstück-Halteanordnung WH nicht behindert wird.

An der Basis BA ist schließlich im Bereich der Teilstation PS1 zum Beladen von auf Blockstücken B aufgeblockten Brillengläsern L vor dem Abblocken und zum Entladen von Blockstücken B nach dem Abblocken ein Spannzangenzylinder SZ angeflanscht, wie die Fig. 7, 11, 13 und 14 zeigen. Der Spannzangenzylinder SZ kann pneumatisch betätigt werden, um die Spannzange am jeweiligen Werkstückhalter CH auf an sich bekannte Weise zu öffnen bzw. zu schließen.

Auch die Werkstückgegenhalter WC der Werkstück-Halteanordnung WH können um ihre Längsachse LA2 drehend angetrieben werden, wofür der Reinigungsstation CS ein Drehantrieb RD2 zugeordnet ist. Der Drehantrieb RD2 ist ortsfest am Maschinengestell MG montiert, genauer an der damit verbundenen Grundplatte GP mittels einer Konsole KE1 befestigt. Der Drehantrieb RD2 kann vermittels einer Kupplung CL2 mit demjenigen Werkstückgegenhalter WC antriebsverbunden werden, der sich gerade an der Reinigungsstation CS befindet.

Diesbezügliche Einzelheiten sind insbesondere den Fig. 9, 10, 12, 13, 17 und 18 zu entnehmen. Um nahe der Drehachse RA der Werkstück-Halteanordnung WH Platz zu schaffen für die oben schon erwähnte und nachfolgend noch zu beschreibende axiale Verstellmöglichkeit der Werkstückgegenhalter WC, ist der Drehantrieb RD2 für die Reinigungsstation CS über die Konsole KE1 radial versetzt an der Grundplatte GP montiert. Bei der Kupplung CL2 handelt es sich hier um eine kraftschlüssige Kupplung, nämlich eine Magnetkupplung, die einen antriebsseitigen magnetischen Mitnehmer MN2 aufweist. Die Drehmomentübertragung erfolgt über einen Luftspalt von dem Mitnehmer MN2 auf jeweils ein metallisches Gegenstück GS an der zweiten Stirnwand SW2. Bei einer Drehung der Werkstück-Halteanordnung WH um die Drehachse RA schwenkt das jeweilige Gegenstück GS der Magnetkupplung CL2 einfach unter den Mitnehmer MN2 des Drehantriebs RD2, wodurch die Kupplung CL2 eingekuppelt ist. Das Auskuppeln erfolgt durch Wegschwenken des jeweiligen Gegenstücks GS aus der Gegenüberlage mit dem Mitnehmer MN2 bei einem Weiterdrehen der Werkstück-Halteanordnung WH um die Drehachse RA.

Das jeweilige Gegenstück GS für die Kupplung CL2 ist zusammen mit einem ersten Zahnrad eines Zahnradpaars ZP an einem Lagerbock LB drehbar gelagert, der an der zweiten Stirnwand SW2 befestigt ist. Wie insbesondere die Fig. 17 und 18 zeigen, sind also vier entsprechende Lagerböcke LB gleichmäßig über dem Umfang verteilt und jeweils den Arbeitsräumen AR1, AR2, AR3, AR4 der Werkstück-Halteanordnung WH zugeordnet an der zweiten Stirnwand SW2 befestigt. Über das jeweilige Zahnradpaar ZP erfolgt der drehende Antrieb der Werkstückgegenhalter WC, wenn sich der entsprechende Arbeitsraum AR1, AR2, AR3, AR4 an der Reinigungsstation CS befindet. Hierfür ist, wie am besten in Fig. 22 zu sehen ist, das zweite Zahnrad des Zahnradpaars ZP an einem Spindelgehäuse SG für die Werkstückgegenhalter WC befestigt, das seinerseits mittels einer (Dreh)Lageranordnung in einem Lagerflansch LH1 drehbar gelagert ist, der an der zweiten Stirnwand SW2 angebracht ist.

Die Fig. 22 zeigt auch, dass zur Linearführung der einzelnen Werkstückgegenhalter WC gegenüber der zweiten Stirnwand SW2 jeweils eine Gleitlager-Linearführung vorgesehen ist, mit einem im Spindelgehäuse SG fest montierten Lagerflansch LH2, in dem ein Aluminium-Vierkantrohr VK über eine (Linear)Lageranordnung linear geführt und gelagert ist. Hierdurch ist das Vierkantrohr VK auch gegen ein Verdrehen relativ zum Lagerflansch LH2 gesichert. Über ein Zwischenstück ist an dem jeweiligen Vierkantrohr VK der vorerwähnte Saugkopf SH des Werkstückgegenhalters WC befestigt.

Parallel zu der vorbeschriebenen Gleitlager-Linearführung ist für jeden Werkstückgegenhalter WC eine Rundstangenführung mit Kugelbuchsen KB als weitere Linearführung montiert. Diese Linearführung umfasst jeweils eine über eine Traverse TV mit dem jeweiligen Vierkantrohr VK fest verbundene Rundstange RE, die gemäß Fig. 22 über je zwei Kugelbuchsen KB in einem zentralen Lagerstück LK der Werkstück-Halteanordnung WH gelagert ist. Das zentrale Lagerstück LK ist fest mit der zweiten Stirnwand SW2 und dem zentralen Nabenabschnitt NA der Werkstück-Halteanordnung WH verbunden und trägt gemäß den Fig. 12 und 22 auch das vorerwähnte Gleitlager GL der Werkstück-Halteanordnung WH. Durch die so bewirkte, kombinierte Linearführung (Gleitlager-Linearführung und Rundstangenführung) wird einem Verkippen der Werkstückgegenhalter WC gegenüber der zweiten Stirnwand SW2 entgegengewirkt.

Wie insbesondere die Fig. 19 und 20 zeigen, sind die Werkstückgegenhalter WC der Werkstück-Halteanordnung WH mittels eines jeweils zugeordneten Pneumatikzylinders PC unabhängig voneinander axial verlagerbar. Hierbei ist der jeweilige Pneumatikzylinder PC fest an dem Lagerstück LK in der zweiten Stirnwand SW2 angebracht und ragt mit seinem Zylindergehäuse in paralleler Anordnung zu den vorbeschriebenen Linearführungen in den zentralen Nabenabschnitt NA der Werkstück-Halteanordnung WH hinein. Eine Kolbenstange des jeweiligen Pneumatikzylinders PC ist mit ihrem vom Zylindergehäuse abgewandten Ende an der Traverse TV befestigt.

Zur pneumatischen Ansteuerung der Pneumatikzylinder PC, die hier als doppeltwirkende Zylinder ausgeführt sind, ist jedem Pneumatikzylinder PC ein Schaltventil SV zugeordnet, das im dargestellten Ausführungsbeispiel als stößelbetätigtes monostabiles 5/2-Wege-Ventil (siehe auch Fig. 23) ausgeführt ist. Wie insbesondere die Fig. 17 und 18 zeigen, sind also vier entsprechende Schaltventile SV gleichmäßig über dem Umfang verteilt und jeweils den Arbeitsräumen AR1, AR2, AR3, AR4 der Werkstück-Halteanordnung WH zugeordnet von außen an der zweiten Stirnwand SW2 befestigt.

In der Ventilgrundstellung ist das jeweilige Schaltventil SV durch Federvorspannung so geschaltet, das der Pneumatikzylinder PC eine Bewegung in die hintere Zylinderendlage ("Einfahren") ausführt. Diese Ventilstellung wird etwa für die Abblockstation DS benötigt, um dort das Brillenglas L bei aktiviertem Vakuum am Saugkopf SH vom Blockstück B zu ziehen, wofür beispielsweise eine Abzugskraft von ca. 30 N erforderlich ist. Wird das Schaltventil SV geschaltet, so fährt der jeweilige Pneumatikzylinder PC den damit verbundenen Werkstückgegenhalter WC nach vorne, in Richtung des gegenüberliegenden Werkstückhalters CH. Durch diese Ventilschaltung ist es z.B. in der Abblockstation DS möglich, die Schaltkraft vom Schaltventil SV wegzunehmen, wenn das Vakuum am Saugkopf SH aufgebaut ist, der auf dem abzublockenden Brillenglas L aufliegt, worauf das Brillenglas L über den Pneumatikzylinder PC vom am Werkstückhalter CH gehaltenen Blockstück B weggezogen wird.

Zur Betätigung der Schaltventile SV sind Betätigungszylinder BZ vorgesehen, die jeweils einen Stößel zur mechanischen Beaufschlagung der Schaltventile SV mit einer Schaltkraft - in Fig. 23 durch Betätigungspfeile an den Schaltventilen SV angedeutet - besitzen und bezüglich des Maschinengestells MG ortsfest gehalten sind. Genauer gesagt sind, wie insbesondere die Fig. 8 bis 10 zeigen, diese Betätigungszylinder BZ an der zweiten Gehäusewand GW2 des Gehäuses für die Werkstück-Halteanordnung WH befestigt, und zwar oberhalb und zu beiden Seiten der Werkstück-Halteanordnung WH. Unterhalb der Werkstück-Halteanordnung WH ist kein Betätigungszylinder BZ verbaut. Dabei sind zwei der Betätigungszylinder BZ der Ladestation PS zugeordnet, d.h. ein Betätigungszylinder BZ für die erste Teilstation PS1 und ein Betätigungszylinder BZ für die zweite Teilstation PS2. Der weitere Betätigungszylinder BZ hingegen ist der Abblockstation DS zugeordnet. Nur in der Reinigungsstation CS ist kein Betätigungszylinder BZ vorgesehen. Demgemäß ist in den Stationen PS1, PS2, DS ein Vorfahren des Werkstückgegenhalters WC möglich, in der Reinigungsstation CS hingegen nicht (siehe hierzu auch Fig. 12).

Eine pneumatische Versorgung der mit der zweiten Stirnwand SW2 der Werkstück-Halteanordnung WH um die Drehachse RA drehbaren Pneumatikzylinder PC und der Saugköpfe SH für die Werkstückgegenhalter WC der Werkstück-Halteanordnung WH erfolgt über eine gemeinsame Drehdurchführung DD, die gegen ein Verdrehen gegenüber dem Maschinengestell MG abgestützt ist. Zur Abstützung der Drehdurchführung DD gegen ein Verdrehen hat die Drehdurchführung DD gemäß insbesondere den Fig. 8 bis 10 und 12 ein Gehäuse, das über eine die vorbeschriebenen Komponenten an der zweiten Stirnwand SW2 umgebende, käfigartige Stützstruktur KS an der zweiten Gehäusewand GW2 für die Werkstück-Halteanordnung WH befestigt ist.

Bei der hier vorgesehenen Verschaltung der Pneumatikzylinder PC können alle Schaltventile SV über einen gemeinsamen Druckanschluss versorgt werden, während für die vier Saugköpfe SH an den Werkstückgegenhaltern WC vier getrennt zu steuernde Unterdruckanschlüsse benötigt werden, wie dies in Fig. 23 schematisch dargestellt ist. Somit ist es möglich, eine handelsübliche Drehdurchführung DD mit nur fünf Kanälen zu verbauen. Wie in den Fig. 19, 20 und 23 gezeigt, führt eine Druckleitung DL1 von der Drehdurchführung DD an den Eingang des jeweiligen Schaltventils SV, dessen zwei Ausgänge über Druckleitungen DL2, DL3 an je eine Seite des jeweiligen Pneumatikzylinders PC angeschlossen sind. Darüber hinaus führt je eine Saugleitung SL von der Drehdurchführung DD zu dem Saugkopf SH des jeweiligen Werkstückgegenhalters WC.

Im dargestellten Ausführungsbeispiel hat jede Saugleitung SL einen Spiralschlauchabschnitt, um den Linearbewegungen der Werkstückgegenhalter WC folgen zu können (siehe hierzu Fig. 18). Der Spiralschlauchabschnitt ist an einen Durchgangskanal angeschlossen, der jeweils in den Traversen TV ausgebildet ist (insbesondere in den Fig. 17 bis 21 mit gestrichelten Linien eingezeichnet). Der Durchgangskanal wiederum ist über einen festen Schlauchabschnitt mit einem Rohr verbunden, das gemäß Fig. 22 durch das Vierkantrohr VK der Linearführung verläuft und zum jeweiligen Saugkopf SH führt.

Wie weiter oben schon erwähnt, ist die erste Düsenbaugruppe DB1 bewegbar am Maschinengestell MG montiert, um die Axiallage und den Anstellwinkel der ersten Hochdruckdüse HD1 auch während des Abblockprozesses einstellen zu können. Details hierzu sind insbesondere den Fig. 7, 8 und 14 bis 16 zu entnehmen.

Demgemäß ist zur Erzeugung einer Axialbewegung der ersten Düsenbaugruppe DB1 parallel zu den Längsachsen LA1 der Werkstückhalter CH ein Linearantrieb AD vorgesehen, der über eine Konsole KE2 mit der Grundplatte GP verschraubt ist. Im dargestellten Ausführungsbeispiel handelt es sich bei dem Linearantrieb AD um einen Elektrozylinder mit Steppermotor und Geberrückführung, der als CNC-Achse betrieben werden kann. Der Linearantrieb AD ist betätigungswirksam mit einem Schlitten SD verbunden, der über eine Rundstangenführung RF mit Kugelbuchsen an der Konsole KE2 geführt ist, wie am besten in Fig. 16 zu erkennen ist. Der in die Abblockstation DS gemäß den Fig. 5 und 7 hineinragende Schlitten SD durchgreift eine Öffnung in der ersten Gehäusewand GW1 des Gehäuses für die Werkstück-Halteanordnung WH, wobei eine zwischen dem Schlitten SD und der Öffnung angeordnete Flanschdichtung FD die Abblockstation DS gegenüber der Umgebung abdichtet.

Der Schlitten SD trägt an seinem in die Abblockstation DS hineinragenden Ende ein Schneckenradgetriebe SR (siehe die Fig. 15 und 16), an dem die erste Düsenbaugruppe DB1 angeflanscht ist und über das die Winkeleinstellung der ersten Hochdruckdüse HD1 erfolgt. Der Antrieb des Schneckenradgetriebes SR erfolgt ebenfalls durch einen Steppermotor mit Geberrückführung, so dass die so gebildete Schwenkachse auch als CNC-Achse betrieben werden kann. Mit dieser Winkeleinstellung kann genau tangential auf eine Grenzschicht zwischen Brillenglas L und Blockmaterial bzw. zwischen Blockmaterial und Blockstück B gezielt werden. Die so definierte Auftreffstelle des Hochdruckstrahls kann durch die beiden CNC-Achsen auch an der Außenkontur des Brillenglases L bzw. des Blockstücks B während des Abblockens nachgeführt werden.

Wie insbesondere in den Fig. 9 und 10 gezeigt ist, besitzt die zweite Teilstation PS2 zum Entladen von abgeblockten Brillengläsern L nach dem Abblocken eine Einrichtung ET zum Trocknen der abgeblockten Brillengläser L als weitere Behandlungseinrichtung der Abblockvorrichtung AV. Die Trocknereinrichtung ET weist einen Werkstückgreifer PG auf, mittels dessen ein abgeblocktes Brillenglas L gegriffen werden kann. Ferner umfasst die Trocknereinrichtung ET wenigstens eine Luftdüse LD1, LD2. Im dargestellten Ausführungsbeispiel sind sogar zwei Luftdüsen LD1, LD2 vorgesehen, nämlich zwei Flachstrahldüsen, die oben am Gehäuse für die Werkstück-Halteanordnung WH befestigt sind. Der Werkstückgreifer PG und die Luftdüsen LD1, LD2 können relativ zueinander bewegt werden, so dass zur Trocknung eines vom Werkstückgreifer PG gegriffenen abgeblockten Brillenglases L ein von den Luftdüsen LD1, LD2 abgegebener Luftstrom über das Brillenglas L geführt wird.

Im dargestellten Ausführungsbeispiel ist der Werkstückgreifer PG als Parallelgreifer ausgeführt, der gemäß insbesondere Fig. 10 zwei parallel geführte, einzeln angesteuerte Greiffingerhalter PG1 aufweist. Jeder Greiffingerhalter PG1 trägt endseitig ein gummiertes Greiffingerpaar PG2, das gegenüber dem Greiffingerhalter PG1 verschwenken kann. Zum Greifen des Brillenglases L können die beiden Greiffingerhalter PG1 parallel aufeinander zu bewegt werden. Mit dem so ausgebildeten Parallelgreifer können auch Brillengläser L mit unsymmetrischen Randformen gegriffen werden, da sich die Greiffingerpaare PG2 aufgrund der schwenkbaren Lagerung an den Greiffingerhaltern PG1 an die Randform der abgeblockten Brillengläser L anpassen können.

Zur Erzeugung der vorerwähnten Relativbewegung zwischen dem Werkstückgreifer PG und den Luftdüsen LD1, LD2 ist ein Schwenkmechanismus PM vorgesehen, der am besten in den Fig. 9 und 10 zu sehen ist. Der Schwenkmechanismus PM weist einen Lagerbock PM1 auf, der an der zweiten Gehäusewand GW2 des Gehäuses für die Werkstück-Halteanordnung WH montiert ist. In dem Lagerbock PM1 ist eine Schwenkwelle PM2 um eine Schwenkachse SA schwenkbar gelagert. An dem in den Fig. 9 und 10 linken Ende der Schwenkwelle PM2 ist ein abgewinkelter Schwenkarm PM3 befestigt, der an seinem von der Schwenkwelle PM2 abgewandten Ende den Werkstückgreifer PG trägt. An dem gegenüberliegenden, in den Fig. 9 und 10 rechten Ende der Schwenkwelle PM2 sind zwei Betätigungshebel PM4 angebracht. An den Betätigungshebeln PM4 ist ein Elektrozylinder PM5 mit Steppermotor und Geberrückführung angelenkt, dessen Kolbenstange gelenkig mit der Grundplatte GP verbunden ist.

Es ist ersichtlich, dass durch geeignete Ansteuerung des Elektrozylinders PM5 der am Schwenkarm PM3 angebrachte Werkstückgreifer PG um die Schwenkachse SA in die zweite Teilstation PS2 der Ladestation PS eingeschwenkt (Fig. 9)bzw. aus der zweiten Teilstation PS2 ausgeschwenkt (Fig. 10) werden kann, entsprechend dem in den Fig. 9 und 10 eingezeichneten Doppelpfeil.

Somit ist der folgende kombinierte Entnahme- und Trocknungsvorgang möglich: Der Werkstückgreifer PG wird vermittels des Schwenkmechanismus PM um die Schwenkachse SA in den Arbeitsraum der Werkstück-Halteanordnung WH eingeschwenkt, der sich gerade an der zweiten Teilstation PS2 der Ladestation PS befindet (Fig. 9). Das in diesem Arbeitsraum an dem Saugkopf SH des Werkstückgegenhalters WC gehaltene Brillenglas L wird über den zugeordneten Pneumatikzylinder PC mit dem Werkstückgegenhalter WC in eine Übergabeposition verfahren, in der der Werkstückgreifer PG das Brillenglas L greift. Nachdem das am Saugkopf SH des Werkstückgegenhalters WC anstehende Vakuum abgeblasen wurde, wird der Werkstückgegenhalter WC über den jeweiligen Pneumatikzylinder PC zurückgefahren und die eigentliche Trocknung des Brillenglases L kann beginnen. Dazu wird das vom Werkstückgreifer PG gehaltene Brillenglas L mittels des Schwenkmechanismus PM langsam an den Luftdüsen LD1, LD2 vorbei geschwenkt. Hierbei wird die Trocknung über die Schwenkgeschwindigkeit um die Schwenkachse SA gesteuert. Nachdem der Elektrozylinder PM5 des Schwenkmechanismus PM seine Endlage erreicht- hat und somit auch die Schwenkbewegung um die Schwenkachse SA ein Ende gefunden hat (Fig. 10), kann das getrocknete Brillenglas L vom Ladesystem LS abgeholt werden. Zeitgleich mit dem Abholen des getrockneten Brillenglases L dreht die Werkstück-Halteanordnung WH weiter und der nächste kombinierte Entnahme- und Trocknungsvorgang kann beginnen.

Zur Ausbildung des Gehäuses für die Werkstück-Halteanordnung WH sei an dieser Stelle noch Folgendes festgehalten. Gemäß den Fig. 1 bis 5, 7 und 8 ist die Ladestation PS nicht von oben abgedeckt, so dass das Ladesystem LS die Abblockvorrichtung AV ohne Kollisionen Be- und Entladen kann. In axialer Richtung begrenzen die erste Gehäusewand GW1 und die zweite Gehäusewand GW2 den Bereich der Stationen PS, DS, CS, in dem sich die Arbeitsräume AR1, AR2, AR3, AR4 der Werkstück-Halteanordnung WH bewegen. Nach vorne ist die Abblockstation DS durch eine dritte Gehäusewand GW3 begrenzt, während eine vierte Gehäusewand GW4 die Reinigungsstation CS nach hinten begrenzt, wie insbesondere die Fig. 5 zeigt. Hier ist auch gut zu erkennen, dass die dritte Gehäusewand GW3 und die vierte Gehäusewand GW4 jeweils mit einem Fenster versehen sind, um für den Bediener einen Einblick in die jeweilige Station DS, CS zu gewähren. Abgedichtet sind gemäß Fig. 5 nur die Abblockstation DS, die Reinigungsstation CS sowie teilweise die zweite Teilstation PS2 der Ladestation PS. Die Abdichtung erfolgt jeweils durch eine Vierkantschnur DM aus Nitrilkautschuk (NBR), die diagonal geklemmt und in Dichtrichtung einstellbar ist. Die Vierkantschnur DM dichtet auf den Trennwänden TW der Werkstück-Halteanordnung WH, wie in Fig. 5 gezeigt. An der zweiten Teilstation PS2 der Ladestation PS sind gemäß Fig. 5 oben und hinten (d.h. in Fig. 5 nach oben und links) dünne Scheiben vorgesehen. Eine Dichtigkeit ist hier nicht erforderlich, da zum einen die Absaugung SU Luft aus dieser Station saugt und zum anderen die Öffnung für den Werkstückgreifer PG nicht abgedichtet ist. Schließlich ist auf der Grundplatte GP noch ein kleines Becken BK mit Rücklaufkanälen ausgebildet (siehe insbesondere die Fig. 5); falls doch Wasser austritt und bis auf die Grundplatte GP läuft, kann dieses zurückgeführt werden.

Als Prozessflüssigkeit wird in der Abblockvorrichtung AV Wasser verwendet. Hierbei kann zum Abblocken z.B. mit einem Druck von ca. 160 bar gearbeitet werden. Beim Reinigen der Brillengläser L und der Blockstücke B werden je nach Werkstück zwischen 80 bar und 160 bar verwendet. Da der Wasserstrahl auch auf die optischen Flächen der Brillengläser L trifft, ist dafür Sorge zu tragen, dass das Wasser frei von Partikeln ist, was durch eine externe Einheit (nicht dargestellt) gewährleistet wird, die der Abblockvorrichtung AV gefiltertes Wasser mit einem definierten Druck und Volumenstrom zur Verfügung stellt. Ein am hydraulischen Eingang der Abblockvorrichtung AV vorgesehener Wasserfilter F (siehe die Fig. 1 und 2) kann hier für zusätzliche Sicherheit sorgen.

Wie für den Fachmann aus der obigen Beschreibung eines bevorzugten Ausführungsbeispiels der Abblockvorrichtung AV ersichtlich ist, werden in der Abblockvorrichtung AV allgemein folgende (Haupt)Prozessschritte i) bis v) eines Abblockverfahrens für jedes einzelne Brillenglas L durchgeführt:
1. Einlegen eines an einem Blockstück B aufgeblockten Brillenglases L in die erste Teilstation PS1 der Ladestation PS der Abblockvorrichtung AV als erster Handhabungsschritt i), mit Aufnahme des aufgeblockten Brillenglases L am Blockstück B an bzw. in einem der Werkstückhalter CH der Werkstück-Halteanordnung WH;
2. Abblocken des Brillenglases L von dem Blockstück B in der Abblockstation DS der Abblockvorrichtung AV durch einen von der ersten Hochdruckdüse HD1 abgegebenen Hochdruckstrahl, dessen Ausrichtung bezüglich des Brillenglases L bzw. des Blockstücks B beim Abblocken ggf. verändert wird, wie oben unter Bezugnahme auf die Fig. 14 bis 16 beschrieben, wobei während dieses Abblockschritts ii) der das Blockstück B haltende Werkstückhalter CH durch den Drehantrieb RD1 der Abblockstation DS drehend angetrieben wird und das Brillenglas L von einem der vorgefahrenen Werkstückgegenhalter WC der Werkstück-Halteanordnung WH mit dem daran vorgesehenen Saugkopf SH gehalten und vom Blockstück B abgezogen wird (siehe hierzu auch die Fig. 12, links);
3. Reinigen des abgeblockten Brillenglases L und des abgeblockten Blockstücks B in der Reinigungsstation CS der Abblockvorrichtung AV durch von der zweiten Hochdruckdüse HD2 (für das Brillenglas L) bzw. der dritten Hochdruckdüse HD3 (für das Blockstück B) abgegebene Hochdruckstrahlen, wobei während dieses Reinigungsschritts v) das von dem zurückgefahrenen Werkstückgegenhalter WC mit dem Saugkopf SH gehaltene Brillenglas L und das im gegenüberliegenden Werkstückhalter CH gehaltene Blockstück B durch die an der Reinigungsstation CS vorgesehenen Drehantriebe RD1, RD2 drehend angetrieben werden (siehe hierzu auch Fig. 12, rechts);
4. Entnehmen des abgeblockten Brillenglases L aus der zweiten Teilstation PS2 der Ladestation PS der Abblockvorrichtung AV von dem vorgefahrenen Werkstückgegenhalter WC als zweiter Handhabungsschritt iii), wie oben unter Bezugnahme auf die Fig. 9 und 10 schon beschrieben; und
5. Entnehmen des vom Brillenglas L getrennten Blockstücks B aus der ersten Teilstation PS1 der Ladestation PS von dem Werkstückhalter CH als dritter Handhabungsschritt iv).

Hierbei werden der obige Abblockschritt ii), der Reinigungsschritt v) und der zweite Handhabungsschritt iii) für verschiedene Brillengläser L bzw. Blockstücke B simultan ausgeführt, wobei das jeweilige abgeblockte Brillenglas L bei dem zweiten Handhabungsschritt iii) vorteilhaft zugleich getrocknet wird, wie oben unter Bezugnahme auf die Fig. 9 und 10 bereits beschrieben. Parallel dazu finden die ersten und dritten Handhabungsschritte i) und iv) statt, diese untereinander jedoch in sequentieller Weise, weil in der ersten Teilstation PS1 der Ladestation PS zuerst das abgeblockte Blockstück B aus dem jeweiligen Werkstückhalter CH genommen werden muss bevor ein neues geblocktes Brillenglas L an seinem Blockstück B in den Werkstückhalter CH eingesetzt werden kann. Dieser zeitgleiche Ablauf der verschiedenen Prozessschritte wird ermöglicht durch die um die Drehachse RA drehbare Werkstück-Halteanordnung WH mit ihren identisch ausgerüsteten Arbeitsräumen AR1, AR2, AR3, AR4, die hierbei in einem Bewegungszyklus von Station zu Station am Maschinengestell MG bewegt wird. So ist es möglich, den Durchsatz von abgeblockten Brillengläsern L auf z.B. 250 Brillengläser L pro Stunde zu steigern.

Eine Optikmaschine für das Behandeln und/oder Bearbeiten von optischen Werkstücken, wie Brillengläsern, hat ein Maschinengestell, an dem eine Werkstück-Halteanordnung bewegbar gelagert und wenigstens zwei Behandlungs- und/oder Bearbeitungseinrichtungen zur Behandlung und/oder Bearbeitung eines in der Werkstück-Halteanordnung gehaltenen Werkstücks montiert sind. Die Werkstück-Halteanordnung weist eine Mehrzahl von Trennwänden auf, die wenigstens drei Arbeitsräume voneinander trennen und begrenzen, welche mit der Werkstück-Halteanordnung zu den Behandlungs- und/oder Bearbeitungseinrichtungen bewegbar sind. Jedem Arbeitsraum ist zur parallelen Nutzung der Arbeitsräume für verschiedene Werkstücke ein Werkstückhalter zugeordnet. Im Einsatz als Abblockvorrichtung ist jeder Arbeitsraum mit der Werkstück-Halteanordnung bezüglich des Maschinengestells in einem Bewegungszyklus von einer am Maschinengestell ortsfesten Ladestation, über hiervon räumlich beabstandete, die Behandlungs- und/oder Bearbeitungseinrichtungen umfassende, ortsfeste Abblock- und Reinigungsstationen wieder zur Ladestation verlagerbar, so dass die Arbeitsräume für verschiedene Werkstücke und unterschiedliche Vorgänge simultan nutzbar sind.

### BEZUGSZEICHENLISTE

- AD: Linearantrieb für erste Düsenbaugruppe
- AM1: erster Antriebsmotor des Ladesystems
- AM2: zweiter Antriebsmotor des Ladesystems
- AV: Abblockvorrichtung
- AR1: erster Arbeitsraum der Werkstück-Halteanordnung
- AR2: zweiter Arbeitsraum der Werkstück-Halteanordnung
- AR3: dritter Arbeitsraum der Werkstück-Halteanordnung
- AR4: vierter Arbeitsraum der Werkstück-Halteanordnung
- AX: Achse der Werkstück-Halteanordnung
- B: Blockstück
- BA: Basis für Werkstück-Halteanordnung
- BF: Bedienfeld der Abblockvorrichtung
- BK: Becken in Grundplatte
- BZ: Betätigungszylinder für Schaltventil
- CH: Werkstückhalter der Werkstück-Halteanordnung
- CL1: Kupplung für Werkstückhalter
- CL2: Kupplung für Werkstückgegenhalter
- CS: Reinigungsstation der Abblockvorrichtung
- DB1: erste Düsenbaugruppe in Abblockstation
- DB2: zweite Düsenbaugruppe in Reinigungsstation
- DB3: dritte Düsenbaugruppe in Reinigungsstation
- DD: Drehdurchführung für Werkstück-Halteanordnung
- DL1: Druckleitung zum Schaltventil
- DL2: Druckleitung zum Pneumatikzylinder
- DL3: Druckleitung zum Pneumatikzylinder
- DM: Dichtschnur für Gehäuseabdichtung
- DS: Abblockstation der Abblockvorrichtung
- ET: Einrichtung zum Trocknen in Ladestation
- F: Filter der Hydraulikanordnung
- FB: Förderband der Abblockvorrichtung
- FD: Flanschdichtung für Düsenverstellung
- GL: Gleitlager für Werkstück-Halteanordnung
- GP: Grundplatte für Werkstück-Halteanordnung
- GS: Gegenstück für Magnetkupplung
- GW1: erste Gehäusewand für Werkstück-Halteanordnung
- GW2: zweite Gehäusewand für Werkstück-Halteanordnung
- GW3: dritte Gehäusewand für Werkstück-Halteanordnung
- GW4: vierte Gehäusewand für Werkstück-Halteanordnung
- H1: erster Halter des Ladesystems
- H2: zweiter Halter des Ladesystems
- H3: dritter Halter des Ladesystems
- HA: Hydraulikanordnung der Abblockvorrichtung
- HD1: erste Hochdruckdüse in Abblockstation
- HD2: zweite Hochdruckdüse in Reinigungsstation
- HD3: dritte Hochdruckdüse in Reinigungsstation
- HT: Halter für Grundplatte
- KB: Kugelbuchse der Linearführung Werkstückgegenhalter
- KE1: Konsole für Drehantrieb Reinigungsstation
- KE2: Konsole für Linearantrieb Düsenverstellung
- KL: Klotz für Basis
- KP: Klemmplatte für Grundplatte
- KR: Kreuzrollenlager für Werkstück-Halteanordnung
- KS: Stützstruktur für Drehdurchführung
- KU1: Kulissenstein für Kupplung Werkstückhalter
- KU2: Kulissennut für Kupplung Werkstückhalter
- KU3: Kulissenelement für Kupplung Werkstückhalter
- KU4: Ringnut für Kupplung Werkstückhalter
- L: optisches Werkstück / Brillenglas
- LA1: Längsachse des Werkstückhalters
- LA2: Längsachse des Werkstückgegenhalters
- LB: Lagerbock für Gegenstück Kupplung Werkstückgegenhalter
- LD1: Luftdüse der Trocknereinrichtung
- LD2: Luftdüse der Trocknereinrichtung
- LF1: erste Linearführungseinheit des Ladesystems
- LF2: zweite Linearführungseinheit des Ladesystems
- LH1: Lagerflansch für Drehlagerung Werkstückgegenhalter
- LH2: Lagerflansch für Linearlagerung Werkstückgegenhalter
- LK: Lagerstück der Werkstück-Halteanordnung
- LS: Ladesystem der Abblockvorrichtung
- MG: Maschinengestell der Abblockvorrichtung
- MN1: Mitnehmer an Kupplung Werkstückhalter
- MN2: Mitnehmer an Kupplung Werkstückgegenhalter
- NA: Nabenabschnitt der Werkstück-Halteanordnung
- ND1: erste Niederdruckdüse für Reinigungsstation
- ND2: zweite Niederdruckdüse für Abblockstation
- PC: Pneumatikzylinder für Werkstückgegenhalter
- PE: Pumpeneinrichtung der Hydraulikanordnung
- PG: Werkstückgreifer in zweiter Teilstation zum Entladen
- PG1: Greiffingerhalter des Werkstückgreifers
- PG2: Greiffingerpaar des Werkstückgreifers
- PM: Schwenkmechanismus für Werkstückgreifer
- PM1: Lagerbock des Schwenkmechanismus
- PM2: Schwenkwelle des Schwenkmechanismus
- PM3: Schwenkarm des Schwenkmechanismus
- PM4: Betätigungshebel des Schwenkmechanismus
- PM5: Elektrozylinder des Schwenkmechanismus
- PS: Ladestation der Abblockvorrichtung
- PS1: erste Teilstation der Ladestation
- PS2: zweite Teilstation der Ladestation
- R: Transportrichtung des Förderbands
- RA: Drehachse der Werkstück-Halteanordnung
- RD0: Servomotor für Werkstück-Halteanordnung
- RD1: Drehantrieb für Werkstückhalter
- RD2: Drehantrieb für Werkstückgegenhalter
- RE: Rundstange der Linearführung Werkstückgegenhalter
- RF: Rundstangenführung für Düsenverstellung
- RK: Rezeptkasten
- RS: Ringfeder-Spannelement für Achse
- SA: Schwenkachse des Schwenkmechanismus
- SD: Schlitten für Düsenverstellung
- SF: Spannflansch für Achse
- SG: Spindelgehäuse für Werkstückgegenhalter
- SH: Saugkopf am Werkstückgegenhalter
- SL: Saugleitung zum Saugkopf Werkstückgegenhalter
- SR: Schneckenradgetriebe für Düsenverstellung
- SS: Schaltschrank der Abblockvorrichtung
- SU: Absaugung der Abblockvorrichtung
- SV: Schaltventil für Pneumatikzylinder
- SZ: Spannzangenzylinder für Werkstückhalter
- SW1: erste Stirnwand der Werkstück-Halteanordnung
- SW2: zweite Stirnwand der Werkstück-Halteanordnung
- T: Tank für Hydraulikanordnung
- TG: trichterförmiger Gehäuseabschnitt
- TR: Träger / y-Schlitten des Ladesystems
- TS: Übergabestation der Abblockvorrichtung
- TV: Traverse der Linearführung Werkstückgegenhalter
- TW: Trennwand der Werkstück-Halteanordnung
- VE: Verteilereinrichtung der Hydraulikanordnung
- VK: Vierkantrohr der Linearführung Werkstückgegenhalter
- WC: Werkstückgegenhalter der Werkstück-Halteanordnung
- WG0: Winkelgetriebe für Drehantrieb Werkstück-Halteanordnung
- WH: Werkstück-Halteanordnung der Abblockvorrichtung
- ZG: Zugglied des Ladesystems
- ZP: Zahnradpaar für Werkstückgegenhalter
- ZR0: Zahnrad für Werkstück-Halteanordnung
- ZR1: Zahnrad für Werkstück-Halteanordnung

- x: Längenrichtung
- y: Breitenrichtung
- z: Höhenrichtung

## Patentansprüche

1. Optikmaschine (AV) für das Behandeln und/oder Bearbeiten von optischen Werkstücken (L), insbesondere Brillengläsern, mit einem Maschinengestell (MG), einer am Maschinengestell (MG) bewegbar gelagerten Werkstück-Halteanordnung (WH) und wenigstens zwei am Maschinengestell (MG) montierten Behandlungs- und/oder Bearbeitungseinrichtungen (DB1, DB2, DB3) zur Behandlung und/ oder Bearbeitung eines in der Werkstück-Halteanordnung (WH) gehaltenen optischen Werkstücks (L), **dadurch gekennzeichnet, dass** die Werkstück-Halteanordnung (WH) eine Mehrzahl von Trennwänden (TW) aufweist, die wenigstens drei Arbeitsräume (AR1, AR2, AR3, AR4) voneinander trennen und begrenzen, denen zur parallelen Nutzung für verschiedene optische Werkstücke (L) jeweils ein Werkstückhalter (CH) zugeordnet ist, wobei die Arbeitsräume (AR1, AR2, AR3, AR4) mit der Werkstück-Halteanordnung (WH) bezüglich des Maschinengestells (MG) bewegbar sind, so dass jeder Arbeitsraum (AR1, AR2, AR3, AR4) wahlweise von einer am Maschinengestell (MG) ortsfesten Ladestation (PS) für das optische Werkstück (L) zu den hiervon räumlich beabstandeten, die Behandlungs- und/oder Bearbeitungseinrichtungen (DB1, DB2, DB3) umfassenden Behandlungs- und/oder Bearbeitungsstationen (DS, CS) verlagerbar ist und umgekehrt.

2. Optikmaschine (AV) nach Anspruch 1, **dadurch gekennzeichnet,**
**dass** die Werkstückhalter (CH) der Werkstück-Halteanordnung (WH) jeweils um ihre Längsachse (LA1) drehbar gelagert sind und/oder
**dass** die Arbeitsräume (AR1, AR2, AR3, AR4) der Werkstück-Halteanordnung (WH) mit ihren Werkstückhaltern (CH) um eine gemeinsame Drehachse (RA) drehbar angeordnet sind.

3. Optikmaschine (AV) nach Anspruch 2, **dadurch gekennzeichnet, dass** die Werkstückhalter (CH) der Werkstück-Halteanordnung (WH) wahlweise um ihre Längsachse (LA1) drehend antreibbar sind, wofür wenigstens einer der Behandlungs- und/oder Bearbeitungsstationen (DS, CS) ein Drehantrieb (RD1) zugeordnet ist, der am Maschinengestell (MG) montiert und vermittels einer Kupplung (CL1) mit demjenigen Werkstückhalter (CH) antriebsverbindbar ist, der sich in der jeweiligen Behandlungs- und/oder Bearbeitungsstation (DS, CS) befindet.

4. Optikmaschine (AV) nach Anspruch 2 oder 3, **dadurch gekennzeichnet, dass** die Werkstück-Halteanordnung (WH) trommelartig ausgebildet ist, mit zwei einander gegenüberliegenden Stirnwänden (SW1, SW2), zwischen denen die die Arbeitsräume (AR1, AR2, AR3, AR4) trennenden Trennwände (TW) angeordnet sind, wobei die Drehachse (RA) durch die Stirnwände (SW1, SW2) verläuft.

5. Optikmaschine (AV) nach Anspruch 4, **dadurch gekennzeichnet,**
**dass** eine erste Stirnwand (SW1) der Werkstück-Halteanordnung (WH) die Werkstückhalter (CH) trägt und/oder
**dass** eine zweite Stirnwand (SW2) der Werkstück-Halteanordnung (WH) Werkstückgegenhalter (WC) trägt, die mit den Werkstückhaltern (CH) ausgefluchtet sind.

6. Optikmaschine (AV) nach Anspruch 5, **dadurch gekennzeichnet,**
**dass** die Werkstückgegenhalter (WC) der Werkstück-Halteanordnung (WH) jeweils um ihre Längsachse (LA2) drehbar gelagert sind und/oder
**dass** die Werkstückgegenhalter (WC) der Werkstück-Halteanordnung (WH) jeweils entlang ihrer Längsachse (LA2) parallel zur Drehachse (RA) axial verlagerbar sind und/oder
**dass** die Werkstückgegenhalter (WC) der Werkstück-Halteanordnung (WH) jeweils an ihrem in den jeweiligen Arbeitsraum (AR1, AR2, AR3, AR4) hineinragenden Ende mit einem Saugkopf (SH) zum Halten des optischen Werkstücks (L) versehen sind.

7. Optikmaschine (AV) nach Anspruch 6, **dadurch gekennzeichnet, dass** die Werkstückgegenhalter (WC) der Werkstück-Halteanordnung (WH) wahlweise um ihre Längsachse (LA2) drehend antreibbar sind, wofür wenigstens einer der Behandlungs- und/oder Bearbeitungsstationen (CS) ein Drehantrieb (RD2) zugeordnet ist, der am Maschinengestell (MG) montiert und vermittels einer Kupplung (CL2) mit demjenigen Werkstückgegenhalter (WC) antriebsverbindbar ist, der sich in der jeweiligen Behandlungs- und/oder Bearbeitungsstation (CS) befindet.

8. Optikmaschine (AV) nach Anspruch 6 oder 7, **dadurch gekennzeichnet, dass** die Werkstückgegenhalter (WC) der Werkstück-Halteanordnung (WH) mittels eines jeweils zugeordneten Pneumatikzylinders (PC) unabhängig voneinander axial verlagerbar sind.

9. Optikmaschine (AV) nach Anspruch 8, **dadurch gekennzeichnet, dass** eine pneumatische Versorgung der mit der zweiten Stirnwand (SW2) um die Drehachse (RA) drehbaren Pneumatikzylinder (PC) und/oder Saugköpfe (SH) für die Werkstückgegenhalter (WC) der Werkstück-Halteanordnung (WH) über eine gemeinsame Drehdurchführung (DD) erfolgt, die gegen ein Verdrehen gegenüber dem Maschinengestell (MG) abgestützt ist.

10. Optikmaschine (AV) nach wenigstens dem Anspruch 3 oder 7, **dadurch gekennzeichnet, dass** es sich bei der Kupplung (CL1, CL2) den jeweiligen Behandlungs- oder Bearbeitungserfordernissen entsprechend um eine formschlüssige Kupplung (CL1) oder eine kraftschlüssige Kupplung (CL2) handelt.

11. Optikmaschine (AV) nach einem der vorhergehenden Ansprüche, **dadurch gekennzeichnet, dass** die Optikmaschine (AV) zum Abblocken von optischen Werkstücken (L), insbesondere Brillengläsern, von zugeordneten Blockstücken (B) ausgebildet ist, mit
der Ladestation (PS) zum Beladen von auf Blockstücken (B) aufgeblockten optischen Werkstücken (L) vor dem Abblocken und/ oder Entladen von abgeblockten optischen Werkstücken (L) und/ oder von Blockstücken (B) nach dem Abblocken,
einer Abblockstation (DS) als Behandlungsstation zum Abblocken der optischen Werkstücke (L) vom jeweils zugeordneten Blockstück (B) und
einer Reinigungsstation (CS) als Behandlungsstation zum Reinigen der abgeblockten Werkstücke (L) und/oder der Blockstücke (B),
wobei jeder Arbeitsraum (AR1, AR2, AR3, AR4) mit der Werkstück-Halteanordnung (WH) in einem Bewegungszyklus von der Ladestation (PS), über die Abblockstation (DS) und die Reinigungsstation (CS) zur Ladestation (PS) verlagerbar ist, so dass die Arbeitsräume (AR1, AR2, AR3, AR4) für verschiedene optische Werkstücke (L) und unterschiedliche Vorgänge zeitgleich nutzbar sind.

12. Optikmaschine (AV) nach Anspruch 11, **dadurch gekennzeichnet,**
**dass** die Abblockstation (DS) als erste Behandlungseinrichtung eine erste Düsenbaugruppe (DB1) mit einer ersten Hochdruckdüse (HD1) für die Abgabe eines Druckmittel-Hochdruckstrahls zum Abblocken der optischen Werkstücke (L) vom jeweils zugeordneten Blockstück (B) aufweist und/oder
**dass** die Reinigungsstation (CS) als zweite Behandlungseinrichtung eine zweite Düsenbaugruppe (DB2) mit einer zweiten Hochdruckdüse (HD2) für die Abgabe eines Druckmittel-Hochdruckstrahls zum Reinigen der abgeblockten Werkstücke (L) und/oder der Blockstücke (B) hat und/oder
**dass** die Ladestation (PS) eine erste Teilstation (PS1) zum Beladen von auf Blockstücken (B) aufgeblockten optischen Werkstücken (L) vor dem Abblocken und zum Entladen von Blockstücken (B) nach dem Abblocken sowie eine zweite Teilstation (PS2) zum Entladen von abgeblockten optischen Werkstücken (L) nach dem Abblocken aufweist und/oder
**dass** der Abblockstation (DS) und/oder der Reinigungsstation (CS) wenigstens eine separate Reinigungsdüse (ND1, ND2) zur Abgabe eines Druckmittel-Niederdruckstrahls für die Reinigung der jeweiligen Station (DS, CS) zugeordnet ist und/oder
**dass** unterhalb der Abblockstation (DS) und der Reinigungsstation (CS) ein trichterförmiger Gehäuseabschnitt (TG) zum gemeinsamen Sammeln von Druckmittel, Blockmaterial und sonstigen Rückständen zur Aufbereitung oder Entsorgung angeordnet ist.

13. Optikmaschine (AV) nach Anspruch 12, **dadurch gekennzeichnet, dass** die erste Hochdruckdüse (HD1) für die Abgabe eines Druckmittel-Hochdruckstrahls zum Abblocken der optischen Werkstücke (L) vom jeweils zugeordneten Blockstück (B) in ihrer axialen Lage und/oder ihrem Anstellwinkel bezüglich eines in der Abblockstation (DS) mittels der Werkstück-Halteanordnung (WH) gehaltenen, aufgeblockten optischen Werkstücks (L) *in situ* einstellbar ist.

14. Optikmaschine (AV) nach Anspruch 12 oder 13, **dadurch gekennzeichnet, dass** die Reinigungsstation (CS) als dritte Behandlungseinrichtung eine dritte Düsenbaugruppe (DB3) mit einer dritten Hochdruckdüse (HD3) für die Abgabe eines Druckmittel-Hochdruckstrahls zum Reinigen der Blockstücke (B) und/oder der abgeblockten Werkstücke (L) hat.

15. Optikmaschine (AV) nach einem der Ansprüche 12 bis 14, **dadurch gekennzeichnet, dass** die zweite Teilstation (PS2) zum Entladen von abgeblockten optischen Werkstücken (L) nach dem Abblocken eine Einrichtung (ET) zum Trocknen der abgeblockten optischen Werkstücke (L) als weitere Behandlungseinrichtung besitzt.

16. Optikmaschine (AV) nach Anspruch 15, **dadurch gekennzeichnet, dass** die Einrichtung (ET) zum Trocknen der abgeblockten optischen Werkstücke (L) einen Werkstückgreifer (PG), mittels dessen ein abgeblocktes optisches Werkstück (L) greifbar ist, und wenigstens eine Luftdüse (LD1, LD2) besitzt, wobei der Werkstückgreifer (PG) und die Luftdüse (LD1, LD2) relativ zueinander bewegbar sind, so dass zur Trocknung eines vom Werkstückgreifer (PG) gegriffenen abgeblockten optischen Werkstücks (L) ein von der Luftdüse (LD1, LD2) abgegebener Luftstrom über das optische Werkstück (L) führbar ist.

17. Verfahren zum Abblocken von optischen Werkstücken (L), insbesondere Brillengläsern, von zugeordneten Blockstücken (B) unter Zuhilfenahme einer Optikmaschine (AV) zum Abblocken von optischen Werkstücken (L), insbesondere nach einem der Ansprüche 11 bis 16, mit den folgenden Schritten:
i) Einlegen eines an einem Blockstück (B) aufgeblockten optischen Werkstücks (L) in die Optikmaschine (AV) als erster Handhabungsschritt,
ii) Abblocken des optischen Werkstücks (L) von dem Blockstück (B) in der Optikmaschine (AV),
iii) Entnehmen des abgeblockten optischen Werkstücks (L) aus der Optikmaschine (AV) als zweiter Handhabungsschritt und
iv) Entnehmen oder Ausgeben des vom optischen Werkstück (L) getrennten Blockstücks (B) aus der Optikmaschine (AV) als dritter Handhabungsschritt,
**dadurch gekennzeichnet, dass** der obige Abblockschritt ii) und wenigstens einer der obigen Handhabungsschritte i), iii) und iv) für verschiedene optische Werkstücke (L) bzw. Blockstücke (B) in ein und derselben Optikmaschine (AV) simultan ausgeführt werden und/oder
dass nach dem Abblockschritt ii) und vor dem Handhabungsschritt iii) und/oder iv) das abgeblockte optische Werkstück (L) und/oder das Blockstück (B) einem Reinigungsschritt v) unterzogen werden, wobei der Reinigungsschritt v) und wenigstens der Abblockschritt ii) für verschiedene optische Werkstücke (L) bzw. Blockstücke (B) in ein und derselben Optikmaschine (AV) simultan ausgeführt werden.

18. Verfahren zum Abblocken von optischen Werkstücken (L), insbesondere Brillengläsern, von zugeordneten Blockstücken (B) nach Anspruch 17, **dadurch gekennzeichnet, dass** der Abblockschritt ii) und/oder der Reinigungsschritt v) unter Zuhilfenahme wenigstens eines Druckmittel-Hochdruckstrahls erfolgt und das abgeblockte optische Werkstück (L) beim Handhabungsschritt iii) zugleich getrocknet wird.

## Claims

1. Optical machine (AV) for the treatment and/or processing of optical workpieces (L), particularly spectacle lenses, comprising a machine frame (MG), a workpiece holding arrangement (WH) movably mounted on the machine frame (MG) and at least two treatment and/or processing devices (DB1, DB2, DB3), which are mounted on the machine frame (MG), for treatment and/or processing of an optical workpiece (L) held in the workpiece holding arrangement (WH), **characterized in that** the workpiece holding arrangement (WH) comprises a plurality of partition walls (TW), which separate and delimit at least three work spaces (AR1, AR2, AR3, AR4) from one another and to each of which a respective workpiece holder (CH) for parallel use for different optical workpieces (L) is assigned, wherein the work spaces (AR1, AR2, AR3, AR4) are movable together with the workpiece holding arrangement (WH) with respect to the machine frame (MG) so that each work space (AR1, AR2, AR3, AR4) is selectably displaceable from a loading station (PS) for the optical workpiece (L), which is fixed in location at the machine frame (MG), to the treatment and/or processing stations (DS, CS), which are physically spaced from the loading station and comprise the treatment and/or processing devices (DB1, DB2, DB3), and conversely.

2. Optical machine (AV) according to claim 1, **characterized in**
**that** the workpiece holders (CH) of the workpiece holding arrangement (WH) are each mounted to be rotatable about the longitudinal axis (LA1) thereof, and/or
**that** the work spaces (AR1, AR2, AR3, AR4) of the workpiece holding arrangement (WH) are arranged to be rotatable together with their workpiece holders (CH) about a common axis (RA) of rotation.

3. Optical machine (AV) according to claim 2, **characterized in that** the workpiece holders (CH) of the workpiece holding arrangement (WH) are selectably drivable for rotation about the longitudinal axis (LA1) thereof, for which purpose a rotary drive (RD1) is assigned to at least one of the treatment and/or processing stations (DS, CS), the rotary drive being mounted on the machine frame (MG) and drivingly connectible by a clutch (CL1) with that workpiece holder (CH) which is present in the respective treatment and/or processing station (DS, CS).

4. Optical machine (AV) according to claim 2 or 3, **characterized in that** the workpiece holding arrangement (WH) is of drum-like construction with two mutually opposite end walls (SW1, SW2) between which the partition walls (TW) separating the work spaces (AR1, AR2, AR3, AR4) are arranged, wherein the axis (RA) of rotation runs through the end walls (SW1, SW2).

5. Optical machine (AV) according to claim 4, **characterized in**
**that** a first end wall (SW1) of the workpiece holding arrangement (WH) carries the workpiece holders (CH), and/or
**that** a second end wall (SW2) of the workpiece holding arrangement (WH) carries workpiece counter-holders (WC) aligned with the workpiece holders (CH).

6. Optical machine (AV) according to claim 5, **characterized in**
**that** the workpiece counter-holders (WC) of the workpiece holding arrangement (WH) are each mounted to be rotatable about the longitudinal axis (LA2) thereof, and/or
**that** the workpiece counter-holders (WC) of the workpiece holding arrangement (WH) are each displaceable axially along the longitudinal axis (LA2) thereof parallel to the axis (RA) of rotation, and/or
**that** the workpiece counter-holders (WC) of the workpiece holding arrangement (WH) are each provided at the end thereof projecting into the respective work space (AR1, AR2, AR3, AR4) with a suction head (SH) for holding the optical workpiece (L).

7. Optical machine (AV) according to claim 6, **characterized in that** the workpiece counter-holders (WC) of the workpiece holding arrangement (WH) are selectably drivable for rotation about the longitudinal axis (LA2) thereof, for which purpose a rotary drive (D2) is assigned to at least one of the treatment and/or processing stations (CS), the rotary drive being mounted on the machine frame (MG) and drivingly connectible by a clutch (CL2) with that workpiece counter-holder (WC) which is present in the respective treatment and/or processing station (CS).

8. Optical machine (AV) according to claim 6 or 7, **characterized in that** the workpiece counter-holders (WC) of the workpiece holding arrangement (WH) are axially displaceable independently of one another by a respectively associated pneumatic cylinder (PC).

9. Optical machine (AV) according to claim 8, **characterized in that** a pneumatic supply of the pneumatic cylinders (PC) and/or suction heads (SH) for the workpiece counter-holders (WC) of the workpiece holding arrangement (WH), which are rotatable together with the second end wall (SW2) about the axis (RA) of rotation, takes place by way of a common rotary joint (DD) which is supported against rotation relative to the machine frame (MG).

10. Optical machine (AV) according to at least claim 3 or 7, **characterized in that** in correspondence with the respective treatment or processing requirements the clutch (CL1, CL2) is a mechanically positive clutch (CL1) or a force-locking clutch (CL2) .

11. Optical machine (AV) according to any one of the preceding claims, **characterized in that** the optical machine (AV) is arranged for deblocking optical workpieces (L), particularly spectacle lenses, from associated block pieces (B), comprising:
the loading station (PS) for loading of optical workpieces (L), which are blocked on block pieces (B), prior to the deblocking and/or unloading of deblocked optical workpieces (L) and/or of block pieces (B) after the deblocking,
a deblocking station (DS) as treatment station for deblocking the optical workpieces (L) from the respectively associated block piece (B) and
a cleaning station (CS) as treatment station for cleaning of the deblocked workpieces (L) and/or the block pieces (B),
wherein each work space (AR1, AR2, AR3, AR4) is displaceable together with the workpiece holding arrangement (WH) in a movement cycle from the loading station (PS) via the deblocking station (DS) and the cleaning station (CS) to the loading station (PS) so that the work spaces (AR1, AR2, AR3, AR4) are simultaneously usable for different optical workpieces (L) and different processes.

12. Optical machine (AV) according to claim 11, **characterized in**
**that** the deblocking station (DS) comprises as first treatment device a first nozzle subassembly (DB1) with a first high-pressure nozzle (HD1) for delivery of a high-pressure pressure medium jet for deblocking of the optical workpieces (L) from the respectively associated block piece (B), and/or
**that** the cleaning station (CS) has, as second treatment device, a second nozzle subassembly (DB2) with a second high-pressure nozzle (HD2) for delivery of a high-pressure pressure medium jet for cleaning the deblocked workpieces (L) and/or the block pieces (B), and/or
**that** the loading station (PS) comprises a first sub-station (PS1) for loading optical workpieces (L), which are blocked on block pieces (B), prior to the deblocking and for unloading block pieces (B) after the deblocking as well as a second sub-station (PS2) for unloading deblocked optical workpieces (L) after the deblocking, and/or
**that** at least one separate cleaning nozzle (ND1, ND2) for delivery of a low-pressure pressure medium jet for cleaning of the respective station (DS, CS) is associated with the deblocking station (DS) and/or the cleaning station (CS), and/or
**that** a funnel-shaped housing section (TG) for collection in common of pressure medium, blocking material and other residues for preparation or disposal is arranged below the deblocking station (DS) and the cleaning station (CS).

13. Optical machine (AV) according to claim 12, **characterized in that** the first high-pressure nozzle (HD1) for delivery of a high-pressure pressure medium jet for deblocking the optical workpieces (L) from the respectively associated block piece (B) is settable in situ in its axial position and/or its adjustment angle with respect to a blocked optical workpiece (L) held in the deblocking station (DS) by the workpiece holding arrangement (WH).

14. Optical machine (AV) according to claim 12 or 13, **characterized in that** the cleaning station (CS) has, as third treatment device, a third nozzle subassembly (DB3) with a third high-pressure nozzle (HD3) for delivery of a high-pressure pressure medium jet for cleaning the block pieces (B) and/or the deblocked workpieces (L).

15. Optical machine (AV) according to any one of claims 12 to 14, **characterized in that** the second sub-station (PS2) for unloading deblocked optical workpieces (L) after the deblocking comprises, as further treatment device, a device (ET) for drying the deblocked optical workpieces (L).

16. Optical machine (AV) according to claim 15, **characterized in that** the device (ET) for drying the deblocked optical workpieces (L) comprises a workpiece gripper (PG), by which a deblocked optical workpiece (L) can be gripped, and at least one air nozzle (LD1, LD2), wherein the workpiece gripper (PG) and the air nozzle (LD1, LD2) are movable relative to one another so that for the drying of a deblocked optical workpiece (L) gripped by the workpiece gripper (PG) an air flow delivered by the air nozzle (LD1, LD2) can be conducted over the optical workpiece (L).

17. Method for deblocking optical workpieces (L), particularly spectacle lenses, from associated block pieces (B) with the assistance of an optical machine (AV) for deblocking optical workpieces (L), particularly according to any one of claims 11 to 16, comprising the following steps:
i) placing an optical workpiece (L), which is blocked on a block piece (B), in the optical machine (AV) as a first handling step,
ii) deblocking the optical workpiece (L) from the block piece (B) in the optical machine (AV),
iii) removing the deblocked optical workpiece (L) from the optical machine (AV) as a second handling step, and
iv) removing or taking out the block piece (B), which is separated from the optical workpiece (L), from the optical machine (AV) as a third handling step,
**characterized in that** the above deblocking step ii) and at least one of the above handling steps i), iii) and iv) are performed simultaneously for different optical workpieces (L) or block pieces (B) in one and the same optical machine (AV), and/or
that, after the deblocking step ii) and prior to the handling step iii) and/or iv), the deblocked optical workpiece (L) and/or the block piece (B) is or are subjected to a cleaning step v), wherein the cleaning step v) and at least the deblocking step ii) are performed simultaneously for different optical workpieces (L) or block pieces (B) in one and the same optical machine (AV).

18. Method for deblocking optical workpieces (L), particularly spectacle lenses, from associated block pieces (B) according to claim 17, **characterized in that** the deblocking step ii) and/or the cleaning step v) is or are carried out with the assistance of at least one high-pressure pressure medium jet and the deblocked optical workpiece (L) is dried at the same time during the handling step iii).

## Revendications

1. Machine optique (AV) pour le traitement et/ou l'usinage de pièces optiques (L), plus particulièrement de verres de lunettes, avec un châssis de machine (MG), un dispositif de maintien de pièce (WH) logé de manière mobile sur le châssis de machine (MG) et au moins deux dispositifs de traitement et/ou d'usinage (DB1, DB2, DB3) pour le traitement et/ou l'usinage d'une pièce optique (L) maintenue dans le dispositif de maintien de pièce (WH), **caractérisée en ce que** le dispositif de maintien de pièce (WH) comprend une pluralité de cloisons (TW) qui séparent et délimitent au moins trois espaces de travail (AR1, AR2, AR3, AR4) entre elles, auxquelles correspond respectivement un support de pièce (CH) pour une utilisation parallèle pour différentes pièces optiques (L), dans laquelle les espaces de travail (AR1, AR2, AR3, AR4) peuvent se déplacer avec le dispositif de maintien de pièce (WH) par rapport au châssis de machine (MG), de sorte que chaque espace de travail (AR1, AR2, AR3, AR4) peut être déplacé d'une station de chargement (PS) fixe sur le châssis de machine (MG), pour la pièce optique (L), vers les stations de traitement et/ou d'usinage (DS, CS), distantes physiquement de celle-ci, comprenant les dispositifs de traitement et/ou d'usinage (DB1, DB2, DB3) ou inversement.

2. Machine optique (AV) selon la revendication 1, **caractérisée en ce que**
les supports de pièces (CH) du dispositif de maintien de pièce (WH) sont logés de manière rotative chacun autour de leur axe longitudinal (LA1) et/ou
les espaces de travail (AR1, AR2, AR3, AR4) du dispositif de maintien de pièce (WH), avec leurs supports de pièces (CH), sont disposés de manière rotative autour d'un axe de rotation commun (RA).

3. Machine optique (AV) selon la revendication 2, **caractérisée en ce que** les supports de pièces (CH) du dispositif de maintien de pièce (WH) peuvent être entraînés soit de manière rotative autour de leur axe longitudinal (LA1), au moins un entraînement rotatif (RD1) correspondant pour cela aux stations de traitement et/ou d'usinage (DS, CS), qui est monté sur le châssis de machine (MG) et peut être relié en entraînement, au moyen d'un couplage (CL1), avec le support de pièce (CH) qui se trouve dans la station de traitement et/ou d'usinage (DS, CS) respective.

4. Machine optique (AV) selon la revendication 2 ou 3, **caractérisée en ce que** le dispositif de maintien de pièce (WH) présente la forme d'un tambour, avec deux parois frontales (SW1, SW2) opposées, entre lesquelles sont disposées les cloisons (TW) séparant les espaces de travail (AR1, AR2, AR3, AR4), dans laquelle l'axe de rotation (RA) s'étend à travers les parois frontales (SW1, SW2).

5. Machine optique (AV) selon la revendication 4, **caractérisée en ce que**
une première paroi frontale (SW1) du dispositif de maintien de pièce (WH) supporte les supports de pièces (CH) et/ou
une deuxième paroi frontale (SW2) du dispositif de maintien de pièce (WH) supporte des contre-supports de pièces (WC) qui sont alignés avec les supports de pièces (CH).

6. Machine optique (AV) selon la revendication 5, **caractérisée en ce que**
les contre-supports de pièces (WC) du dispositif de maintien de pièce (WH) sont logés chacun de manière rotative autour de leur axe longitudinal (LA2) et/ou
les contre-supports de pièces (WC) du dispositif de maintien de pièce (WH) sont mobiles axialement chacun le long de son axe longitudinal (LA2) parallèlement à l'axe de rotation (RA) et/ou
les contre-supports de pièces (WC) du dispositif de maintien de pièce (WH) sont munis chacun, au niveau de leur extrémité pénétrant dans l'espace de travail (AR1, AR2, AR3, AR4) respectif, d'une tête d'aspiration (SH) pour le maintien de la pièce optique (L).

7. Machine optique (AV) selon la revendication 6, **caractérisée en ce que** les contre-supports de pièces (WC) du dispositif de maintien de pièce (WH) peuvent être entraînés en rotation autour de leur axe longitudinal (LA2), au moins un entraînement rotatif (RD2) correspondant, pour cela, à au moins une des stations de traitement et/ou d'usinage (CS), qui est monté sur le châssis de machine (MG) et peut être relié en entraînement, au moyen d'un couplage (CL2), avec le contre-support de pièces (WC) qui se trouve dans la station de traitement et/ou d'usinage (CS) respective.

8. Machine optique (AV) selon la revendication 6 ou 7, **caractérisée en ce que** les contre-supports de pièces (WC) du dispositif de maintien de pièce (WH) peuvent être déplacés axialement indépendamment entre eux chacun au moyen d'un vérin pneumatique (PC) correspondant.

9. Machine optique (AV) selon la revendication 8, **caractérisée en ce qu'**une alimentation pneumatique des vérins pneumatiques (PC) et/ou des têtes d'aspiration (SH) pour les contre-supports de pièces (WC) du dispositif de maintien de pièce (WH) tournant autour de l'axe de rotation (RA) avec la deuxième paroi frontale (SW2) est effectué par l'intermédiaire d'un passage rotatif commun (DD) qui est protégé contre une rotation par rapport au châssis de machine (MG).

10. Machine optique (AV) selon au moins la revendication 3 ou 7, **caractérisée en ce que** le couplage (CL1, CL2) correspondant aux exigences respectives de traitement ou d'usinage est un couplage par complémentarité de forme (CL1) ou un couplage par force (CL2).

11. Machine optique (AV) selon l'une des revendications précédentes, **caractérisée en ce que** la machine optique (AV) est conçue pour le blocage des pièces optiques (L), plus particulièrement de verres de lunettes, à l'aide d'éléments de blocs (B) correspondants, avec
la station de chargement (PS) pour le chargement des pièces optiques (L) bloquées sur des éléments de blocs (B) avant le blocage et/ou le déchargement des pièces optiques (L) bloquées et/ou des éléments de blocs (B) après le blocage,
une station de blocage (DS) en tant que station de traitement pour le blocage des pièces optiques (L) par l'élément de bloc (B) correspondant et
une station de nettoyage (CS) en tant que station de traitement pour le nettoyage des pièces (L) bloquées et/ou des éléments de blocs (B),
dans laquelle chaque espace de travail (AR1, AR2, AR3, AR4) avec le dispositif de maintien de pièces (WH) peut être déplacé, dans un cycle de mouvement, de la station de chargement (PS), en passant par la station de blocage (DS) et la station de nettoyage (CS), vers la station de chargement (PS), de sorte que les espaces de travail (AR1, AR2, AR3, AR4) peuvent être utilisés pour différentes pièces optiques (L) et différents processus simultanément.

12. Machine optique (AV) selon la revendication 11, **caractérisée en ce que**
la station de blocage (DS) comprend, en tant que premier dispositif de traitement, un premier sous-ensemble de buses (DB1) avec une première buse à haute pression (HD1) pour l'émission d'un jet à haute pression d'un fluide sous pression pour le blocage des pièces optiques (L) par l'élément de bloc (B) correspondant et/ou
la station de nettoyage (CS) comprend, en tant que deuxième dispositif de traitement, un deuxième sous-ensemble de buses (DB2) avec une deuxième buse à haute pression (HD2) pour l'émission d'un jet à haute pression d'un fluide sous pression pour le nettoyage des pièces optiques (L) bloquées et/ou des éléments de blocs (B) et/ou
la station de chargement (PS) comprend une première station partielle (PS1) pour le chargement des pièces optiques (L) bloquées sur des éléments de blocs (B) avant le blocage et pour le déchargement des éléments de blocs (B) après le blocage, ainsi qu'une deuxième station partielle (PS2) pour le déchargement des pièces optiques (L) bloquées après le blocage et/ou
à la station de blocage (DS) et/ou à la station de nettoyage (CS) correspond au moins une buse de nettoyage (ND1, ND2) séparée pour l'émission d'un jet à basse pression d'un fluide sous pression pour le nettoyage de la station (DS, CS) correspondante et/ou
en dessous de la station de blocage (DS) et de la station de nettoyage (CS) est disposée une portion de boîtier en forme d'entonnoir (TG) pour la collecte commune du fluide sous pression, du matériau des blocs et autres résidus destinés à être traités ou évacués.

13. Machine optique (AV) selon la revendication 12, **caractérisée en ce que** la première buse à haute pression (HD1) pour l'émission d'un jet à haute pression d'un fluide sous pression pour le blocage des pièces optiques (L) par l'élément de bloc (B) correspondant peut être ajustée in situ dans sa position axiale et/ou son angle d'attaque par rapport à une pièce optique (L) bloquée maintenue dans la station de blocage (DS) au moyen du dispositif de maintien de pièce (WH).

14. Machine optique (AV) selon la revendication 12 ou 13, **caractérisée en ce que** la station de nettoyage (CS), en tant que troisième dispositif de traitement, comprend un troisième sous-ensemble de buses (DB3) avec une troisième buse à haute pression (HD3) pour l'émission d'un jet à haute pression d'un fluide sous pression pour le nettoyage des éléments de blocs (B) et/ou des pièces optiques (L) bloquées.

15. Machine optique (AV) selon l'une des revendications 12 à 14, **caractérisée en ce que** la deuxième station partielle (PS2) comprend, pour le déchargement des pièces optiques (L) bloquées après le blocage, un dispositif (ET) pour le séchage des pièces optiques (L) bloquées, en tant que dispositif de traitement supplémentaire.

16. Machine optique (AV) selon la revendication 15, **caractérisée en ce que** le dispositif (ET) pour le séchage des pièces optiques (L) bloquées comprend un dispositif de préhension de pièce (PG), au moyen duquel une pièce optique (L) bloquée peut être saisie, et au moins une buse d'air (LD1, LD2), dans laquelle le dispositif de préhension de pièce (PG) et la buse d'air (LD1, LD2) sont mobiles l'un par rapport à l'autre, de sorte que, pour le séchage d'une pièce optique (L) bloquée saisie par le dispositif de préhension de pièce (PG), un flux d'air émis par la buse d'air (LD1, LD2) peut être guidé au-dessus de la pièce optique (L).

17. Procédé de blocage de pièces optiques (L), plus particulièrement des verres de lunettes, par des éléments de blocs (B), à l'aide d'une machine optique (AV) pour le blocage de pièces optiques (L), plus particulièrement selon l'une des revendications 11 à 16, avec les étapes suivantes :
i) introduction d'une pièce optique (L) bloquée sur un élément de bloc (B) dans la machine optique (AV), en tant que première étape de manipulation,
ii) blocage de la pièce optique (L) par l'élément de bloc (B) dans la machine optique (AV),
iii) retrait de la pièce optique (L) bloquée hors de la machine optique (AV) en tant que deuxième étape de manipulation et
iv) retrait ou évacuation de l'élément de bloc (B) séparé de la pièce optique (L) hors de la machine optique (AV), en tant que troisième étape de manipulation,
**caractérisé en ce que** l'étape de blocage ii) ci-dessus et au moins une des étapes de manipulation i), iii) et iv) ci-dessus sont exécutées simultanément pour différentes pièces optiques (L) ou éléments de blocs (B) dans la même machine optique (AV) et/ou
après l'étape de blocage ii) et avant l'étape de manipulation iii) et/ou iv), la pièce optique (L) bloquée et/ou l'élément de bloc (B) sont soumis à une étape de nettoyage (v), dans lequel l'étape de nettoyage v) et au moins l'étape de blocage ii) sont exécutées simultanément pour différentes pièces optiques (L) ou éléments de blocs (B) dans la même machine optique (AV).

18. Procédé de blocage de pièces optiques (L), plus particulièrement de verres de lunettes, par des éléments de blocs (B) selon la revendication 17, **caractérisé en ce que** l'étape de blocage ii) et/ou l'étape de nettoyage v) sont exécutées à l'aide d'au moins un jet à haute pression d'un fluide sous pression et la pièce optique (L) bloquée est séchée simultanément lors de l'étape de manipulation iii).
